# EUROPEAN PATENT SPECIFICATION

(11) **EP 2 149 692 B1**
(45) Date of publication and mention of the grant of the patent: **06.04.2022**
(21) Application number: 09251910.7
(22) Date of filing: 30.07.2009
(51) Int. Cl.: F02D 41/06, F02D 41/00, F02D 19/08, F02B 61/02

(54) **Starting system for an internal combustion engine with two fuels**
Startanlage für eine Brennkraftmaschine mit zwei Brennstoffen
Démarrage pour un moteur à combustion interne avec deux combustibles

(30) Priority: 01.08.2008 JP 2008200123
(43) Date of publication of application: 03.02.2010
(73) Proprietor: Yamaha Hatsudoki Kabushiki Kaisha, Iwata-shi, Shizuoka 438-8501 (JP)
(72) Inventor: Tanaka, Tomoaki, Iwata-shi Shizuoka-ken 438-8501 (JP); Nakamura, Michihisa, Iwata-shi Shizuoka-ken 438-8501 (JP); Ishibashi, Miyoshi, Iwata-shi Shizuoka-ken 438-8501 (JP)
(74) Representative: Grünecker Patent- und Rechtsanwälte PartG mbB

(56) References cited:
- EP-A1- 1 895 129
- EP-A1- 2 060 761
- WO-A1-2007/129206
- GB-A- 2 234 781
- JP-A- H0 510 163
- JP-A- 2008 157 141
- JP-B2- 3 044 719

## Description

### BACKGROUND OF THE INVENTION

### Field of the Invention

The present invention relates to vehicles, and more particularly to a vehicle capable of using a fuel containing gasoline and alcohol.

### Description of Related Art

From EP 1 895 129 A1, a fuel injection control device is known, which comprises among other things a water temperature sensor for measuring a cooling water temperature of the engine. Moreover, this document discloses that the engine is operated in a suitable state when the air/fuel ratio, i.e. the ratio between air flowing through the intake pipe and fuel injected from the injector, assumes a proper value. The ECU calculates the proper injection fuel quantity and performs a control to allow the injector to inject the calculated injection fuel quantity.

GB 2 234 781 A describes an engine, which comprises a first heater and a second heater under an air chamber of an intake manifold. Furthermore, this document discloses that an alcohol concentration calculating means reads a signal outputted from an alcohol concentration sensor and calculates the alcohol concentration of the fuel supplied to an injector. Based on the alcohol concentration and the engine temperature, it is judged whether the engine can be started or not.

According to JP H05 10163 A, an internal combustion engine controller is provided with an alcohol sensor as well as a cooling water temperature sensor. Based on the detected cooling water temperature, a transition time for forcibly changing the alcohol concentration value and an allowance for alcohol concentration change are set, and based on the read alcohol concentration, a start-time injection amount is calculated.

JP 3 044719 B2 teaches a control method for a throttle valve. The throttle valve is drive-controlled through a motor by an ECU. An opening speed of the throttle valve, when alcohol fuel is used, is set slower than the opening speed of the throttle valve when gasoline fuel is used.

As disclosed in JP 2008 157141 A, a technique for enhancing startup performance of an internal combustion engine is conventionally known. To this end, the internal combustion engine is provided with a control means which is so configured that when the internal combustion engine is started, the inside of an intake air path is depressurized by the closing operation of an intake air amount control valve.

WO 2007/129206 A1 discloses a control apparatus for an internal combustion engine having a valve timing control means controlling the timing opening and closing of an intake valve disposed in an intake port communicating with a cylinder of the internal combustion engine. The valve timing control means controls a lift of the intake valve during a first intake stroke and a first compression stroke to a low lift amount, which is smaller than the normal lift amount required for intake of a requested intake air amount, and controls the lift of the intake valve in a second intake and a second compression stroke to the normal lift amount.

EP 2 060 761 A1 provides a control system for an internal combustion engine in which fuel containing alcohol is used. A maximum opening of a throttle valve is set according to a concentration parameter indicative of the concentration of alcohol in the fuel, a temperature parameter indicative of the temperature of the engine, and a number of ignitions after start of the engine. Further, the throttle valve opening is limited to a value which is equal to or less than the maximum opening.

In addition, an engine that can use a mixed fuel containing gasoline and alcohol is known from JP H04 214965 A, which discloses an engine starting method for starting that type of engine reliably. Specifically, JP H04 214965 A discloses that an engine should be heated by a heating means, such as a heater, when the temperature of the engine is relatively low at the time of engine starting.

However, in order to install the heating means for a vehicle additionally, the vehicle requires extra space to be allocated for the heating means. The heating means is used when starting the engine. This means that the heating means cannot make use of the engine as its driving source, and the heating means must use a battery for that purpose. This necessitates an increase in the size of the battery. When the size of the battery increase, further extra space is necessary to accommodate the battery. Furthermore, the structure of the vehicle body tends to become more complicated.

In the engine starting method of JP H04 214965 A, the heating means is used for the purpose of starting the engine reliably. The present inventors, however, have found that heating may be necessary even after engine starting in some cases. When a vehicle equipped with an engine using the mixed fuel is started under the condition in which the engine is not sufficiently heated, the engine is put under excessive load. However, in order to keep the engine heated even after engine starting, a heating means with a further higher capacity is necessary.

### BRIEF SUMMARY OF THE INVENTION

The present invention has been accomplished in view of the foregoing and other problems. It is an object of the present invention to enable a vehicle having an engine that uses a mixed fuel containing gasoline and alcohol to start running while the engine is not put under excessive load, even without a large-sized heating means.

This object is achieved according to the present invention by a vehicle having the features of independent claim 1. Advantageous embodiments and further developments of the present invention are specified in the dependent claims.

In accordance with the present invention, a vehicle comprises: an engine for generating a driving force by burning a fuel containing gasoline and alcohol; and a control device for controlling the engine, the control device comprising an engine revolution speed detecting unit configured to detect a state of the engine based on a comparison of a detected cumulative number of revolutions of the engine after engine starting with a predetermined cumulative number of engine revolutions, a content identifying unit configured to detect or estimate an alcohol content of the fuel, a determining unit configured to determine whether or not the vehicle is in a runnable state after the engine has started, wherein the runnable state refers to a state in which the vehicle is capable of starting to move mechanically, and a restricting unit configured to keep the output power of the engine lower than normal so that the starting of the vehicle is restricted or to cancel the restriction based at least on the identified alcohol content of the fuel and the determination whether or not the vehicle is in the runnable state, wherein the restricting unit is configured to keep the output power of the engine lower than normal so that the starting of the vehicle is restricted or to cancel the restriction based on the identified alcohol content of the fuel, the determination whether or not the vehicle is in the runnable state, the detected state of the engine, and optionally an engine temperature detected by an engine temperature detecting unit.

### BRIEF DESCRIPTION OF THE DRAWINGS

Embodiments covered and embodiments not covered by the present invention are described below, by way of example only, with reference to the drawings.
Fig. 1 is a side view of a motorcycle;
Fig. 2 is a configuration view illustrating an engine and various sensors;
Fig. 3 is a control block diagram of a motorcycle according to Embodiment 1 not covered by the present invention;
Fig. 4 is a flow chart illustrating a control process for restricting the starting of a motorcycle according to Embodiment 1 not covered by the present invention;
Fig. 5 is a front view of a display panel;
Fig. 6 is a control block diagram of a motorcycle according to Embodiment 2 not covered by the present invention;
Fig. 7 is a flow chart illustrating a control process for restricting the starting of a motorcycle according to Embodiment 2 not covered by the present invention;
Fig. 8 is a control block diagram of a motorcycle according to Embodiment 3 covered by the present invention;
Fig. 9 is a flow chart illustrating a control process for restricting the starting of a motorcycle according to Embodiment 3 covered by the present invention;
Fig. 10 is a control block diagram of a motorcycle according to Embodiment 4 not covered by the present invention;
Fig. 11 is a flow chart illustrating a control process for restricting the starting of a motorcycle according to Embodiment 4 not covered by the present invention;
Fig. 12 is a flow chart illustrating a control process for restricting the starting of a motorcycle according to Embodiment 5 covered by the present invention;
Fig. 13(a) is a table showing cumulative number of engine revolutions at which the vehicle starting restriction can be cancelled, and Fig. 13(b) is a table showing elapsed time after engine starting at which the vehicle starting restriction can be cancelled;
Fig. 14 is a flow chart illustrating a control process for restricting the starting of a motorcycle according to Embodiment 6 not covered by the present invention;
Fig. 15 is a flow chart illustrating a control process for restricting the starting of a motorcycle according to Embodiment 7 not covered by the present invention;
Fig. 16 is a table showing the engine temperatures at which the vehicle starting restriction can be cancelled;
Fig. 17 is a graph illustrating the relationship of the engine temperature and ethanol content at the time of engine starting versus the engine temperature that is a point of reference for cancelling the vehicle starting restriction;
Fig. 18 is a control block diagram of a motorcycle according to Modified Embodiment 1 covered by the present invention;
Fig. 19 is a control block diagram of a motorcycle according to Modified Embodiment 2 covered by the present invention;
Fig. 20 is a control block diagram of a motorcycle according to Modified Embodiment 3 covered by the present invention; and
Fig. 21 is a control block diagram of a motorcycle according to Modified Embodiment 4 covered by the present invention.

### DETAILED DESCRIPTION

### Embodiment 1

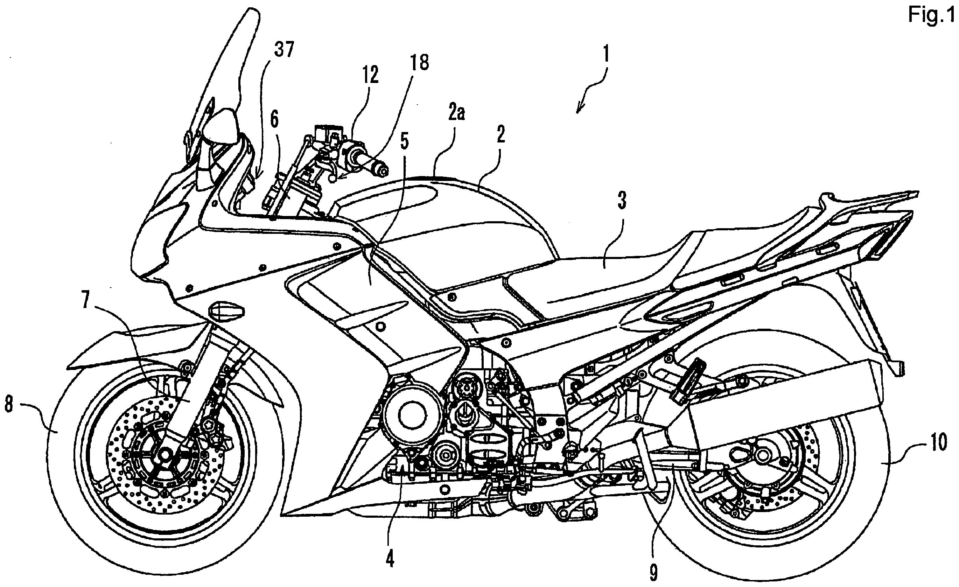

As illustrated in Fig. 1, the vehicle according to the following embodiments is a motorcycle 1. The motorcycle 1 may be any type of motor vehicle, including what is called a sport-type motorcycle, a motor scooter, a moped, a motocrosser, and the like. The vehicle according to the present invention may be a straddle-type vehicle, on which a rider straddles to ride, or a similar type of vehicle. The vehicle according to the present invention may be a straddle-type vehicle other than a motorcycle, such as ATV (All Terrain Vehicle). Furthermore, the vehicle according to the present invention may be a vehicle other than the straddle-type vehicle.

The motorcycle 1 can use a mixed fuel formed by mixing gasoline and alcohol. The following description explains the cases in which ethanol is used as an example of the alcohol.

### Configuration of the Motorcycle

As illustrated in Fig. 1, the motorcycle 1 has a fuel tank 2, a riding seat 3, an engine 4, and a body frame 5 for supporting the just-mentioned components. The fuel tank 2 has a lid 2a. A head pipe 6 is provided at the front of the body frame 5. A steering shaft (not shown) is supported in the head pipe 6. A handlebar 12 is provided on the upper portion of the steering shaft. A front fork 7 is provided on the lower portion of the steering shaft. A front wheel 8 is supported rotatably at the lower end of the front fork 7. A swing arm 9 is supported pivotably on the body frame 5. A rear wheel 10 as a drive wheel is supported rotatably at the rear end of the swing arm 9.

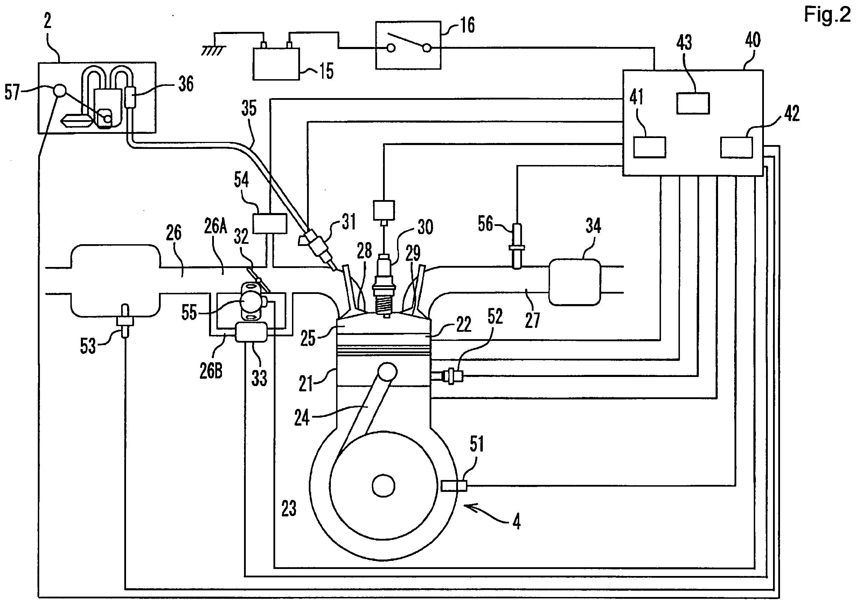

As illustrated in Fig. 2, the engine 4 has a cylinder 21, a piston 22, a crank shaft 23, and a connecting rod 24. The piston 22 reciprocates within the cylinder 21. The connecting rod 24 connects the piston 22 and the crank shaft 23 to each other. The engine 4 also has a fuel injector 31 for injecting fuel, and an ignition device 30. The engine 4 is furnished with a revolution speed sensor 51 for detecting a revolution speed of the crank shaft 23, and a temperature sensor 52 for detecting the temperature of the engine 4. It should be noted that, hereinbelow, the revolution speed of the crank shaft 23 is referred to as the revolution speed of the engine 4. The temperature sensor 52 may detect the temperature of a portion of the component parts of the engine 4 (for example, the cylinder 21), or alternatively, it may detect the temperature of the coolant if the engine 4 is a water-cooled engine. Alternatively, the temperature sensor 52 may detect the temperature of the oil of the engine 4. In short, the temperature sensor 52 may directly detect the temperature of the engine 4, or it may indirectly detect the temperature of the engine 4 via a coolant or the like. The temperature sensor 52 may directly detect the temperature of a combustion chamber 25, or it may indirectly detect the temperature of the combustion chamber 25.

The motorcycle 1 has an air-intake passage 26 for introducing air into the combustion chamber 25. The intake air supplied to the engine 4 passes through the interior of the air-intake passage 26. The engine 4 has an air-intake valve 28 for opening/closing the passage between the air-intake passage 26 and the combustion chamber 25, an exhaust gas passage 27 for discharging the exhaust gas from the combustion chamber 25, and an exhaust valve 29 for opening/closing the passage between the combustion chamber 25 and the exhaust gas passage 27. In the present embodiment, the fuel injector 31 is disposed so as to inject fuel into the air-intake passage 26. It should be noted that the fuel injector 31 may inject fuel into the combustion chamber 25.

The air-intake passage 26 is provided with a temperature sensor 53 for detecting the temperature of the intake air, and a pressure sensor 54 for detecting intake air pressure, which is the internal pressure of the air-intake passage 26. The air-intake passage 26 has a main passage 26A in which a throttle valve 32 is accommodated, and a bypass passage 26B that allows the upstream side and the downstream side of the throttle valve 32 in the main passage 26A to communicate with each other. The throttle valve 32 is provided with a throttle position sensor 55 for detecting the opening degree of the throttle valve 32. The bypass passage 26B is provided with a bypass amount adjusting mechanism 33 for controlling the amount of the bypass air by adjusting the flow passage area. It should be noted that the temperature sensor 53 may detect the temperature of the intake air either directly or indirectly. For example, the temperature sensor 53 may detect the temperature of the wall surface of an air-intake pipe that forms the air-intake passage 26.

The exhaust gas passage 27 is provided with a catalyst 34. The exhaust gas passage 27 is provided with an O₂ sensor 56, serving as the air-fuel ratio sensor, for detecting oxygen contained in the exhaust gas. The air-fuel ratio sensor should be a sensor capable of detecting at least whether or not the air-fuel ratio is on the rich side or the lean side. However, it is of course possible to use a sensor that outputs the air-fuel ratio linearly (i.e., a linear A/F sensor), in other words, a sensor that outputs the air-fuel ratio itself, as the air-fuel ratio sensor. The O₂ sensor 56 in the present embodiment is a sensor that detects whether or not the air-fuel ratio is on the rich side or the lean side.

The fuel tank 2 and the fuel injector 31 are connected by a fuel pipe 35. A fuel pump 36 for supplying fuel to the fuel pipe 35 and a fuel remaining amount sensor 57 for detecting the amount of the fuel inside the fuel tank 2 are provided in the fuel tank 2. The specific configuration of the fuel remaining amount sensor 57 is not limited in any way. It is possible to use a known sensor, such as a liquid level sensor, suitably for the fuel remaining amount sensor 57. It should be noted that the motorcycle 1 estimates the ethanol content based on the detected value obtained by the O₂ sensor 56, and therefore, the motorcycle 1 does not have a sensor for detecting the ethanol content of the fuel in the fuel tank 2. However, it is possible to provide a sensor for detecting the ethanol content of the fuel in the fuel tank 2 so that the ethanol content can be detected directly.

### Structure of the ECU

The motorcycle 1 has an ECU (Electronic Control Unit) 40 as a control device for controlling the engine 4. The ECU 40 has a computing unit 41 for executing various calculations for later-described control processes, and a storage unit 42 for storing various control programs and various information for performing the later-described control processes. The hardware configurations of the computing unit 41 and the storage unit 42 are not limited at all. For example, a CPU may be suitably used as the computing unit 41, and a memory device such as ROM or RAM may be suitably used as the storage unit 42. In the present embodiment, the storage unit 42 includes a non-volatile memory.

The engine 40 also has a content identifying unit 43 for identifying the ethanol content of the fuel. As mentioned above, the ethanol content of the fuel is estimated using the detected value obtained by the O₂ sensor 56. The content identifying unit 43 is a part for performing the estimation to identify the ethanol content. It should be noted that, as mentioned earlier, the motorcycle 1 may be provided with a sensor for detecting the ethanol content of the fuel. When the motorcycle 1 is provided with a sensor for detecting the ethanol content of the fuel, the sensor functions as the content identifying unit 43.

The above-described sensors are connected to the ECU 40 so that detected signals are transmitted from each of the sensors to the ECU 40. Specifically, the sensors connected to the ECU 40 are the revolution speed sensor 51, the temperature sensor 52, the temperature sensor 53, the pressure sensor 54, the throttle position sensor 55, the O₂ sensor 56, and the fuel remaining amount sensor 57. When the motorcycle 1 is provided with a sensor for detecting the ethanol content of the fuel, the sensor is also connected to the ECU 40. The ECU 40 is capable of detecting the state of the engine 4 based on the detected values by the above-described sensors.

The motorcycle 1 has a power supply unit 15 and a main switch 16. When the rider of the motorcycle 1 turns on the main switch 16, the power supply unit 15 and the ECU 40 are electrically energized. The motorcycle 1 has a relay switch or the like (not shown). When the relay switch is turned ON, a portion of the ECU 40 can operate even when the main switch 16 is turned OFF.

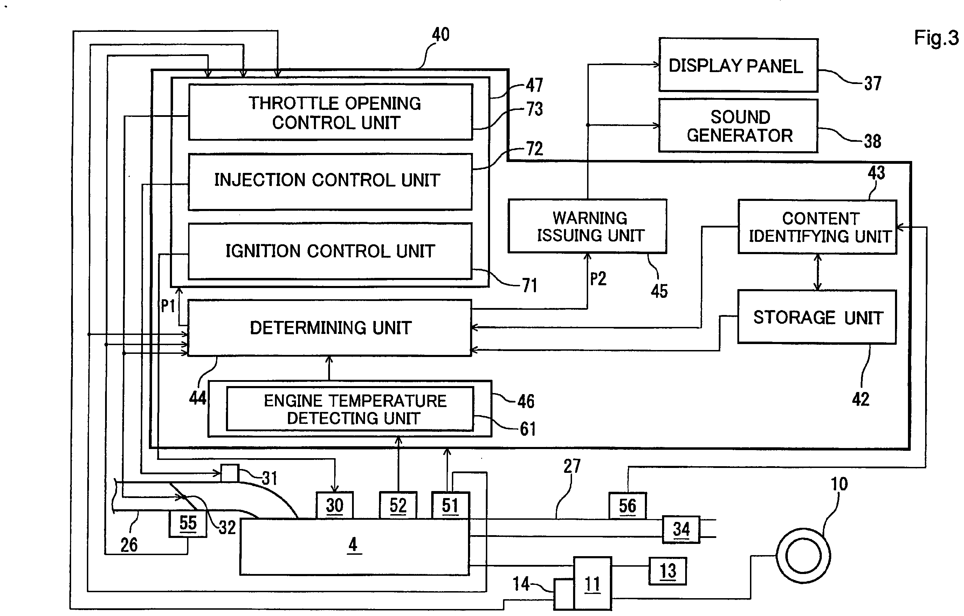

As illustrated in Fig. 3, the motorcycle 1 has a transmission 11. The output power of the engine 4 is transmitted to the rear wheel 10 via the transmission 11. The transmission 11 in the present embodiment is what is called a stepped-type transmission. The transmission 11 has a plurality of shift positions and a neutral position. The motorcycle 1 also has a transmission mechanism 13 for changing the shift positions of the transmission 11. A shift pedal, for example, may be suitably used as the transmission mechanism 13. It is also possible to use an actuator such as a motor as the transmission mechanism 13. The motorcycle 1 has a neutral switch 14. The neutral switch 14 functions as a neutral position sensor for detecting whether or not the transmission 11 is in the neutral position. More specifically, when the transmission 11 is switched between the neutral position and a non-neutral position, the neutral switch 14 is switched between ON and OFF states. When the neutral switch 14 is turned to an ON state or an OFF state, it is detected that the transmission 11 is in the neutral position or a non-neutral position. It is of course possible to use what is called a shift sensor as the neutral position sensor.

The ECU 40 is capable of restricting starting of the motorcycle 1 as appropriate based on the state of the engine 4. Thus, the starting of the motorcycle 1 is restricted under a condition in which the engine 4 has not yet warmed up sufficiently. As a result, it becomes possible to start the vehicle without putting the engine under excessive load. Next, the configuration of the control system for restricting starting of the motorcycle 1 and a control process for restricting the starting will be described.

As illustrated in Fig. 3, the ECU 40 has an ignition control unit 71 for controlling the ignition device 30, an injection control unit 72 for controlling the fuel injector 31, and a throttle opening control unit 73 for controlling the throttle valve 32. The ignition control unit 71, the injection control unit 72, and the throttle opening control unit 73 constitute an output power adjusting unit 47 for adjusting the output power of the engine 4. When the output power of the engine 4 is adjusted so as to restrict the starting of the motorcycle 1, the output power adjusting unit 47 functions as a restricting unit that performs the vehicle starting restriction.

The ECU 40 has an engine state detecting unit 46 for detecting the state of the engine 4. In the present embodiment, the engine state detecting unit 46 is composed of an engine temperature detecting unit 61 for detecting the temperature of the engine 4. In addition, the ECU 40 has a determining unit 44 that determines whether starting of the motorcycle 1 should be restricted or not based on the ethanol content of the fuel and the engine state. The ECU 40 further has a warning issuing unit 45. The warning issuing unit 45 is a component part for issuing a warning to the rider through a display panel 37 or a sound generator 38 when the starting of the motorcycle 1 is restricted.

### Starting Restriction

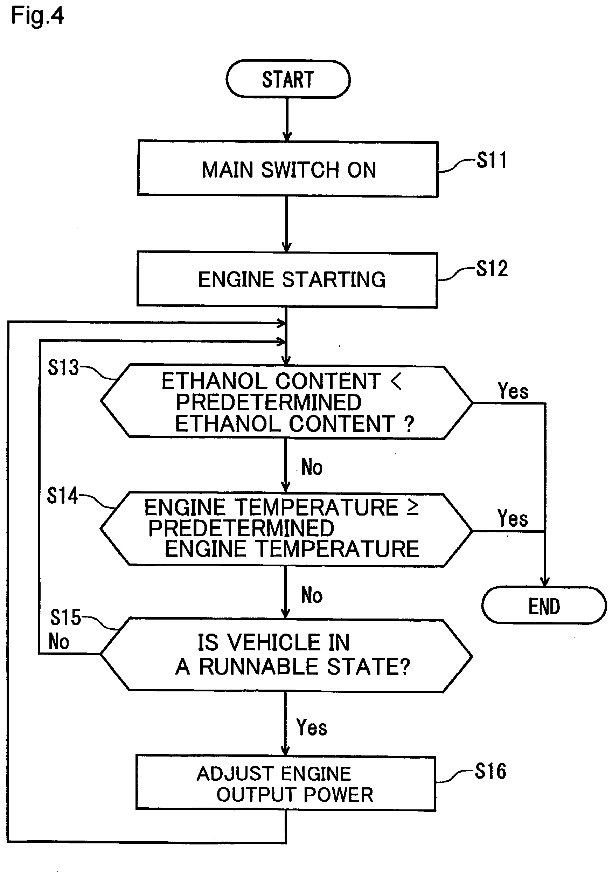

Fig. 4 is a flow chart illustrating a control process for restricting the starting of the motorcycle 1. First, at step S11, the main switch 16 is turned ON, and the ECU 40 is electrically energized. Subsequently, at step S12, the engine 4 is started. For example, the engine 4 is started using a starter motor or a kick pedal, not shown in the drawings.

When the alcohol content of the mixed fuel is high and the engine temperature is low, the engine 4 is put under a heavy load when starting the motorcycle 1. For this reason, at step S13, the determining unit 44 determines whether or not the ethanol content of the fuel is lower than a predetermined content. If the ethanol content is equal to or higher than a predetermined content, the process proceeds to step S14. On the other hand, if the ethanol content is less than the predetermined content, starting of the motorcycle 1 need not be restricted, so the control process is terminated. In other words, the determining unit 44 permits the motorcycle 1 to start moving if the ethanol content is lower than a predetermined content.

It should be noted that the storage unit 42 stores the ethanol content identified by the content identifying unit 43 as needed. The storage unit 42 keeps storing the ethanol content even after the main switch 16 has been turned OFF. For example, when the main switch 16 is turned OFF, the storage unit 42 keeps storing the ethanol content that has been stored therebefore. The ethanol content used in the determination at step S13 may be the ethanol content that has been stored before step S11, i.e., the ethanol content that has been stored before the main switch 16 has been turned ON (which is hereafter referred to as a "previous ethanol content"). The ethanol content used in the determination at step S13 may be the ethanol content that is identified after step 11 or that after step 12.

At step S14, the determining unit 44 determines whether or not the engine temperature is equal to or higher than a predetermined temperature. If the engine temperature is lower than the predetermined temperature, the process proceeds to step S15. On the other hand, if the engine temperature is equal to or higher than the predetermined temperature, starting of the motorcycle 1 need not be restricted, so the control process is terminated. In other words, the determining unit 44 permits the motorcycle 1 to start moving if the engine temperature is higher than a predetermined temperature. The predetermined temperature in step S14 may be a fixed temperature independent of the ethanol content, or may be varied depending on the detected or estimated ethanol content.

Step S13 and step S14 may be performed in any order or at the same time. The predetermined values that serve as a point of reference for the determination in step S13 and step S14, specifically, the predetermined ethanol content in step S13 and the predetermined engine temperature in step S14, may be written in the control program in advance either in a non-rewritable manner or in a rewritable manner as needed. The storage unit 42 may be configured to store the predetermined values as needed.

Step S13 may be performed before step S12. The reason is that, when the ECU 40 has the storage unit 42 (see Fig. 3, etc.), the previous ethanol content can be determined as long as the ECU 40 is electrically energized.

At step S15, the determining unit 44 determines whether or not the motorcycle 1 is in a runnable state. Herein, the term "runnable state" means a state in which the motorcycle 1 can start. Specifically, the "runnable state" refers to a state in which the motorcycle 1 can start to move unless the output power of the engine 4 is reduced in later-described step S16. In other words, the "runnable state" refers to a state in which the motorcycle 1 is capable of starting to move mechanically.

The runnable state can be identified by, for example, the shift position of the transmission 11, the change in the opening degree of the throttle valve 32, the change in the revolution speed of the engine 4, or the rotation of the rear wheel 10. The shift position of the transmission 11 can be detected by the neutral switch 14. If the transmission 11 is at the neutral position, the motorcycle 1 cannot start, so it is determined that the motorcycle 1 is not in a runnable state. The change in the opening degree of the throttle valve 32 can be detected by the throttle position sensor 55. If the opening degree of the throttle valve 32 does not increase, the engine output power such that the motorcycle 1 can start cannot be obtained, so it is determined that the motorcycle 1 is not in a runnable state. In other words, if the opening degree of the throttle valve 32 is not equal to or greater than a predetermined opening degree, it is determined that the motorcycle 1 is not in a runnable state. The change in the revolution speed of the engine 4 can be detected by the revolution speed sensor 51. If the revolution speed of the engine 4 does not increase, the motorcycle 1 cannot start, so it is determined that the motorcycle 1 is not in a runnable state. In other words, if the revolution speed of the engine 4 is equal to or greater than a predetermined revolution speed, it is determined that the motorcycle 1 is not in a runnable state. Whether or not the rear wheel 10 has rotated can be detected by, for example, a vehicle speed sensor, not shown in the drawings. If the rear wheel 10 is not rotated, the motorcycle 1 cannot start, so it is determined that the motorcycle 1 is not in a runnable state.

If it is determined that the motorcycle 1 is not in a runnable state at step S15, it is no longer necessary to restrict starting of the motorcycle 1, so the process returns to step S13. On the other hand, if it is determined that the motorcycle 1 is in a runnable state, the process proceeds to step S16.

At step S16, the output power of the engine 4 is adjusted so that starting of the motorcycle 1 is restricted. It should be noted that the phrase "restricting starting of the motorcycle 1" is intended to include not only inhibiting the motorcycle 1 from starting to move, but also starting to move the motorcycle 1 with the output power of the engine 4 being kept lower than normal (for example, starting the motorcycle 1 at a lower speed than normal). At step S16, the determining unit 44 outputs a start restricting signal P1 (see Fig. 3) to the output power adjusting unit 47. Specifically, if the result of the determination at step S13 is NO, or if the result of the determination at step S14 is NO, a flag for the controlling is set. On the other hand, if the result of the determination at step S13 is YES, or if the result of the determination at step S14 is YES, the flag is cleared. The output power adjustment for the engine 4 as described below is performed only when the flag is set.

Upon receiving the start restricting signal P1, the output power adjusting unit 47 adjusts the output power of the engine 4 so that starting of the motorcycle 1 can be restricted. The method of adjusting the output power of the engine 4 is not particularly limited. For example, the output power of the engine 4 may be adjusted by, for example, adjusting the opening degree of the throttle valve 32 using the throttle opening control unit 73. The output power of the engine 4 may be adjusted by adjusting the fuel injection amount of the fuel injector 31 using the injection control unit 72. The output power of the engine 4 may be adjusted by adjusting the spark ignition timing of the ignition device 30 using the ignition control unit 71. Although not shown in the drawings, the restricting unit for restricting starting of the vehicle is not limited to the output power adjusting unit 47 for adjusting the output power of the engine 4, and it may be such a device that imparts a braking force to the front wheel 8 (see Fig. 1) or the rear wheel 10 to a such degree the motorcycle 1 cannot start to move. The output power adjusting unit 47 may keep the engine 4 in an idle state. The output power adjusting unit 47 may increase the revolution speed of the engine 4 while controlling the revolution speed to be lower than a normal revolution speed. In other words, the output power adjusting unit 47 may adjust the output power of the engine 4 so that the motorcycle 1 can be started more gently than normal. In this case as well, the load to the engine 4 can be reduced comparatively. In this case, it is preferable that the output power of the engine 4 should be suppressed to such a degree that the rider of the motorcycle 1 cannot feel a sense of incongruity. When the motorcycle 1 is provided with a means for heating the engine 4 additionally, the output power adjusting unit 47 may stop the engine 4. The reason is that the engine 4 can be heated by the heating means while the engine 4 is stopped.

The restriction of the starting of the motorcycle 1, in other words, the output power adjustment of the engine 4, is continued until the restriction of starting is cancelled. Next, how the vehicle starting restriction of the motorcycle 1 is cancelled will be described below.

### Cancelling the Starting Restriction

After the process of step S16, the process returns to step S13. It is assumed here that a process of reducing the output power of the engine 4 is performed in step S16. When the engine 4 is stopped at step S16, the process returns to step S11 or S12 again, although not shown in Fig. 4. As described above, at step S13, it is determined whether or not the ethanol content is less than a predetermined ethanol content. At step S14, it is determined whether or not the engine temperature is equal to or higher than a predetermined engine temperature. If the result of the determination at step S13 or step S14 is YES, the engine 4 is no longer put under a heavy load even without restricting the starting of the motorcycle 1, so the control process of the vehicle starting restriction is terminated. In other words, the starting restriction of the motorcycle 1 is cancelled. Specifically, the above-mentioned flag for the controlling is cleared. As a result, the motorcycle 1 is allowed to start or run by normal engine output power.

### Warning

During the time that starting of the motorcycle 1 is being restricted, a warning is issued to the rider to inform the rider that starting is being restricted. As illustrated in Fig. 3, when the determining unit 44 outputs the start restricting signal P1 to the output power adjusting unit 47, it outputs a start restricting signal P2 to the warning issuing unit 45 as well. Upon receiving the start restricting signal P2, the warning issuing unit 45 issues a warning to the rider using either one or both of the display panel 37 and the sound generator 38.

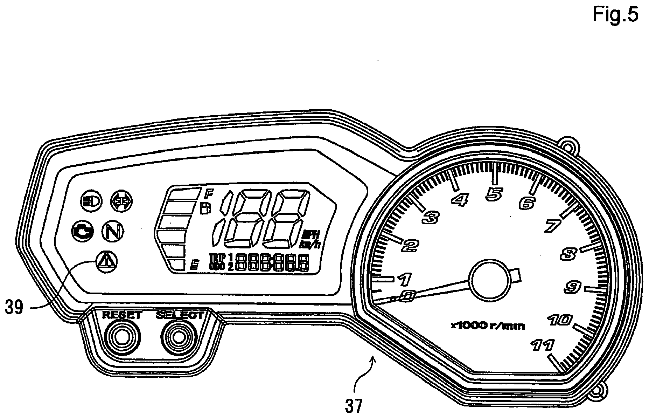

The form of the warning display on the display panel 37 is not particularly limited. The display panel 37 may issue a warning using letters or characters. Alternatively, as illustrated in Fig. 5, the motorcycle 1 may be provided with a warning light 39 so that a warning can be issued to the rider by, for example, lighting up or blinking the warning light 39. The display panel 37 is provided at a position on the motorcycle 1 at which the rider can visually identify the panel. For example, the display panel 37 may be provided in front of the handlebar 12 (see Fig. 1). The warning light 39 may be provided either within the display panel 37, as illustrated in Fig. 5, or may be a separate part from the display panel 37. The sound generator 38 is for issuing a warning to the rider using sound. The sound may be a human voice sound or a warning sound, for example.

The warning issued by the display panel 37, the sound generator 38, and so forth is cancelled automatically when the starting restriction of the motorcycle 1 is cancelled.

### Advantageous Effects of the Embodiment

As has been described above, the motorcycle 1 makes it possible to restrict vehicle starting if the ethanol content is high and the engine temperature is low. Therefore, the motorcycle 1 is prevented from starting running in a condition in which the engine is put under a heavy load. As a result, the present embodiment can prevent the engine 4 from being put under excessive load. Moreover, the motorcycle 1 does not have a large-sized heating device for rapidly heating the engine 4. Thus, since the motorcycle 1 does not require such a heating device, the body structure of the motorcycle 1 can be prevented from becoming complicated. In addition, the motorcycle 1 can be prevented from becoming larger in size.

Moreover, the motorcycle 1 cancels the starting restriction when the ethanol content that is detected or estimated has decreased, or when the engine temperature has risen sufficiently, during the time that the starting is being restricted. Therefore, the starting of the motorcycle 1 is not kept inhibited unnecessarily.

In the present embodiment, the temperature of the engine 4 that is detected by the temperature sensor 52 is taken into consideration to determine whether or not vehicle starting should be restricted. In other words, the present embodiment uses the engine temperature directly as the engine state related to the engine temperature. Thus, the present embodiment achieves highly reliable vehicle starting restriction.

### Embodiment 2

In the foregoing embodiment, the determining unit 44 performs the determination based on the ethanol content and the engine temperature. In other words, it is the engine temperature that is taken into consideration when restricting the starting of the motorcycle 1. However, the engine state that should be taken into consideration when restricting the starting of the motorcycle 1 is not limited to the engine temperature alone. In Embodiment 2, the intake air temperature in the air-intake passage 26 is taken into consideration as the engine state related to the engine temperature. In the following embodiments, the same parts are designated by the same reference numerals, and the description thereof is not repeated here.

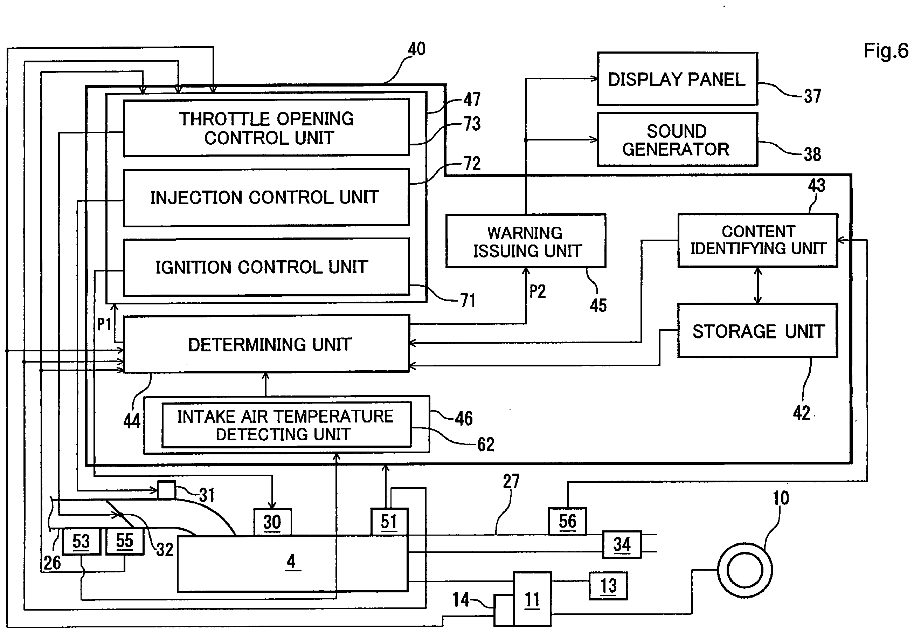

As illustrated in Fig. 6, the ECU 40 has an intake air temperature detecting unit 62 as the engine state detecting unit 46. The intake air temperature detecting unit 62 receives a signal related to the intake air temperature from the temperature sensor 53, and outputs information related to the intake air temperature to the determining unit 44.

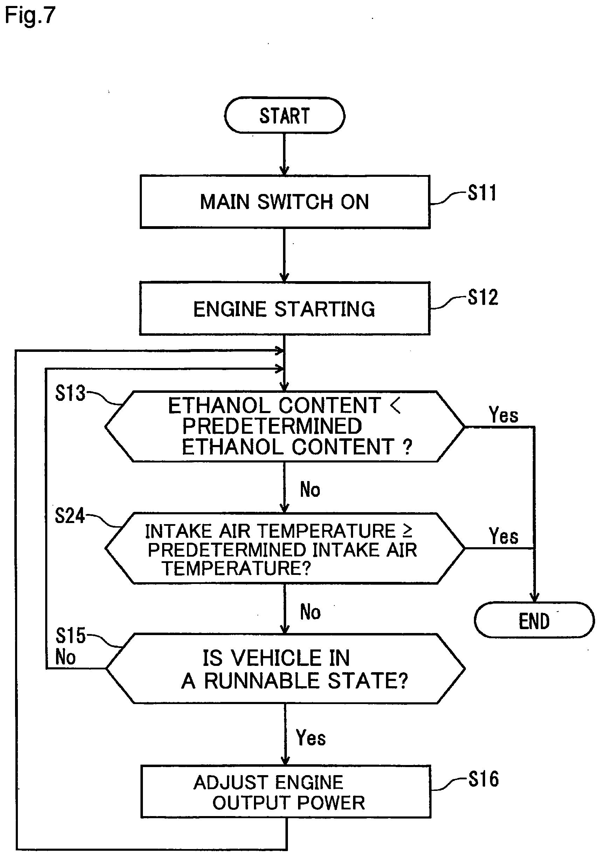

Fig. 7 is a flow chart illustrating a control process for restricting the starting of the motorcycle 1 according to the present embodiment. The control process of the vehicle starting restriction according to Embodiment 2 is the same as that according to Embodiment 1, except that step S14 (see Fig. 4) is replaced with step S24 described below. In the present embodiment, after step S13, the process proceeds to step S24, in which the determining unit 44 determines whether or not the intake air temperature is equal to or higher than a predetermined temperature. If the intake air temperature is equal to or higher than the predetermined temperature, the starting of the motorcycle 1 need not be restricted, so the control process is terminated. In other words, the determining unit 44 determines that the motorcycle 1 can start moving. It should be noted that the vehicle starting restriction is cancelled if the result of the determination in step S24 is YES while starting of the motorcycle 1 is being restricted. On the other hand, if the intake air temperature is less than the predetermined temperature, the process proceeds to step S15.

Step S13 and step S24 may be performed in any order or at the same time. The other respects are the same as Embodiment 1. The predetermined temperature in step S24 may be a fixed temperature at all times independent of the ethanol content, or may be varied depending on the value of the ethanol content.

The same advantageous effects as obtained in Embodiment 1 can be obtained in the present embodiment as well. Furthermore, the present embodiment makes it possible to perform the starting restriction of the motorcycle 1 and the cancellation of the starting restriction even without detecting the engine temperature directly.

### Embodiment 3

Embodiment 3 takes into consideration a cumulative number of revolutions of the engine 4 after engine starting, as the engine state that should be taken into consideration when restricting starting of the motorcycle 1. It is empirically known that the engine temperature is higher when the cumulative number of revolutions of the engine 4 after engine starting is greater. Therefore, the engine temperature can be estimated based on the just-mentioned cumulative number.

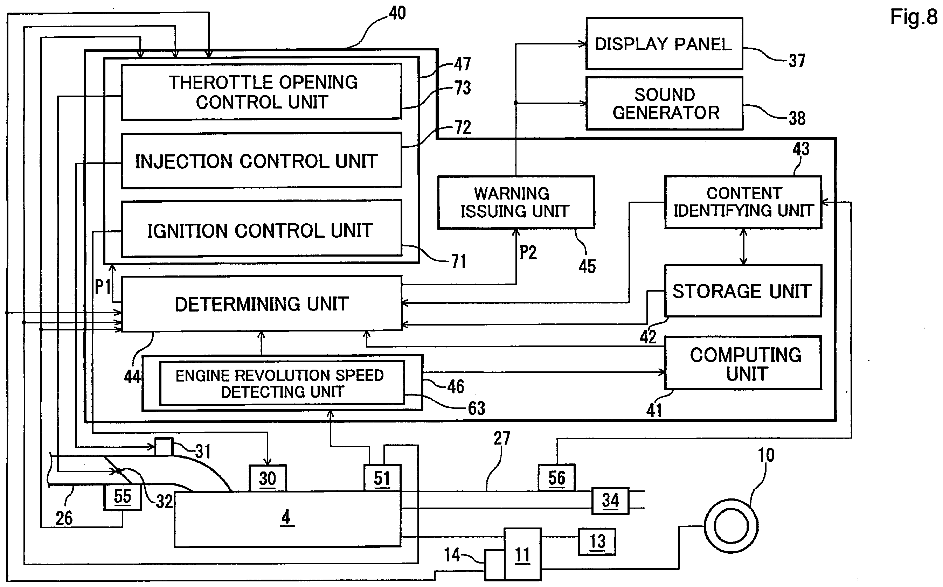

As illustrated in Fig. 8, the ECU 40 has an engine revolution speed detecting unit 63 as the engine state detecting unit 46. The engine revolution speed detecting unit 63 receives a signal related to the revolution speed of the engine 4 (hereinafter simply referred to as an "engine revolution speed") from the revolution speed sensor 51, and outputs information related to the engine revolution speed to the computing unit 41. The computing unit 41 calculates a cumulative number of revolutions of the engine 4 after engine starting by integrating the engine revolution speed. The determining unit 44 receives the cumulative number from the computing unit 41. It is also possible to provide a sensor for detecting the cumulative number of revolutions of the engine 4 in place of the revolution speed sensor 51, to detect a cumulative number of revolutions of the engine 4 after engine starting directly from the just-mentioned sensor. It is also possible to use the number of times of ignition in the ignition device 30 in place of the cumulative number of engine revolutions after engine starting.

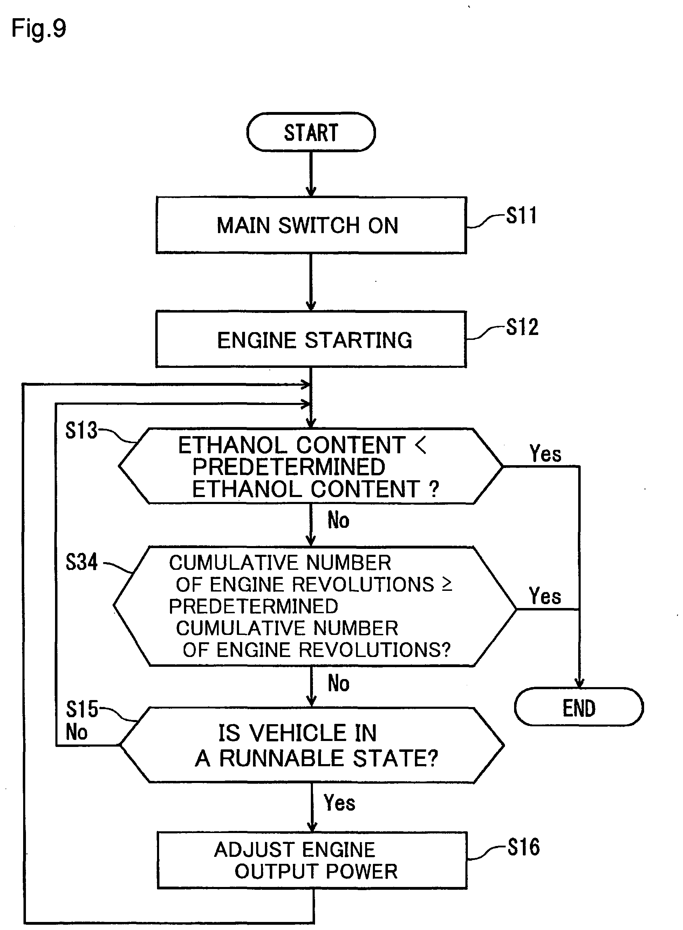

Fig. 9 is a flow chart illustrating a control process for restricting the starting of the motorcycle 1 according to the present embodiment. The control process of the vehicle starting restriction according to Embodiment 3 is the same as that according to Embodiment 1, except that step S14 (see Fig. 4) is replaced with step S34 described below. In the present embodiment, after step S13, the process proceeds to step S34, in which the determining unit 44 determines whether or not the cumulative number of engine revolutions after engine starting is equal to or greater than a predetermined cumulative number. If the result of the determination is YES, the engine temperature is estimated to be sufficiently high. Therefore, starting of the motorcycle 1 need not be restricted, so the control process is terminated. In other words, the determining unit 44 determines that the motorcycle 1 can start moving. It should be noted that the vehicle starting restriction is cancelled if the result of the determination in step S34 is YES while starting of the motorcycle 1 is being restricted. On the other hand, if the result of the determination in step S34 is NO, the process proceeds to step S15.

Step S13 and step S34 may be performed in any order or at the same time. The other respects are the same as Embodiment 1. The predetermined cumulative number in step S34 may be a fixed number at all times independent of the ethanol content, or may be varied depending on the value of the ethanol content.

As described above, the engine temperature is higher when the cumulative number of engine revolutions after engine starting is greater. Accordingly, detecting the cumulative number of engine revolutions is equivalent to detecting the engine temperature. It is also possible that the relationship between cumulative number of engine revolutions and engine temperature may be stored in the storage unit 42 in advance and the engine temperature may be estimated from the cumulative number of engine revolutions. In that case, the starting restriction of the motorcycle 1 and the cancellation of the starting restriction can be performed in a similar manner to Embodiment 1.

The same advantageous effects as obtained in Embodiment 1 can be obtained in the present embodiment as well. Furthermore, the present embodiment makes it possible to perform the starting restriction of the motorcycle 1 and the cancellation of the starting restriction even without detecting the engine temperature directly.

### Embodiment 4

Embodiment 4 takes into consideration elapsed time after starting the engine 4, as the engine state that should be taken into consideration when restricting starting of the motorcycle 1. It is empirically known that the engine temperature is higher when the elapsed time after starting the engine 4 is longer. Therefore, the engine temperature can be estimated based on the just-mentioned elapsed time.

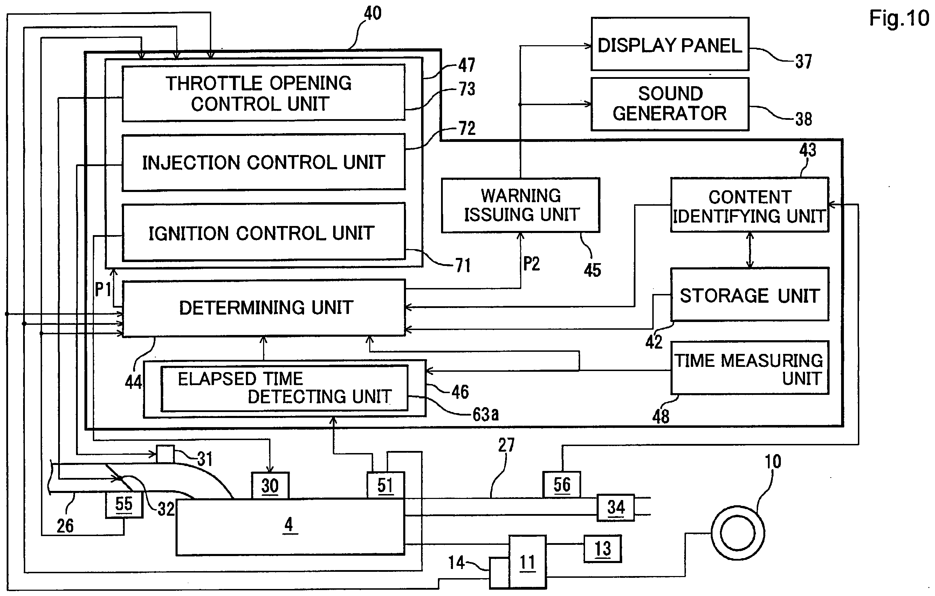

As illustrated in Fig. 10, the ECU 40 has a time measuring unit 48 composed of, for example, a timer. The ECU 40 also has an elapsed time detecting unit 63a for detecting the elapsed time after starting the engine 4, as the engine state detecting unit 46. Whether or not the engine 4 has started can be detected by, for example, the fact that the revolution speed of the engine 4 has been detected by the revolution speed sensor 51. In addition, whether or not the engine 4 has started can also be detected by the fact that the ignition device 30 has started to operate, or by the fact that the fuel injector 31 has started injecting the fuel.

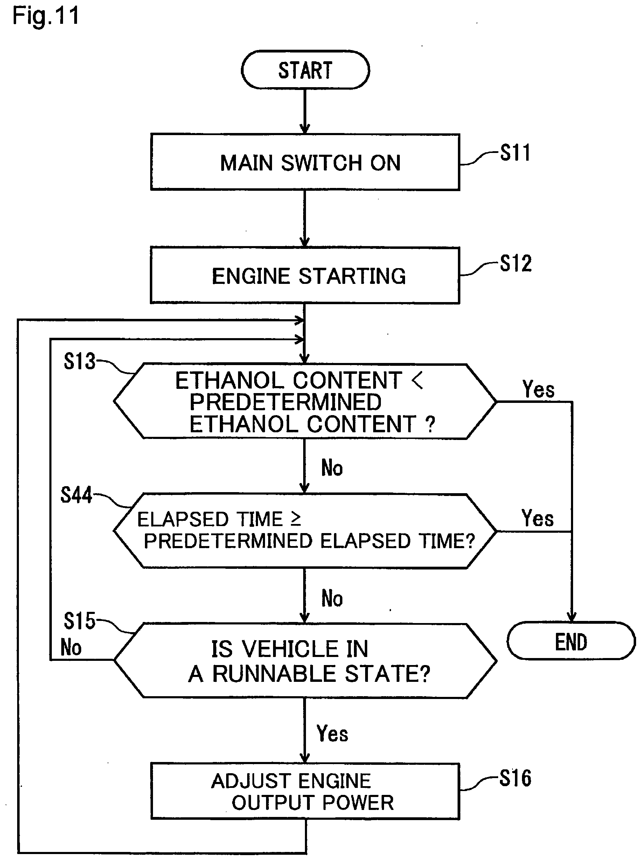

Fig. 11 is a flow chart illustrating a control process for restricting the starting of the motorcycle 1 according to the present embodiment. The control process of the vehicle starting restriction according to Embodiment 4 is the same as that according to Embodiment 1, except that step S14 (see Fig. 4) is replaced with step S44 described below. In the present embodiment, after step S13, the process proceeds to step S44, in which the determining unit 44 determines whether or not the elapsed time after starting the engine is equal to or longer than a predetermined elapsed time. If the result of the determination is YES, the engine temperature is estimated to be sufficiently high. Therefore, starting of the motorcycle 1 need not be restricted, so the control process is terminated. In other words, the determining unit 44 determines that the motorcycle 1 can start moving. It should be noted that the vehicle starting restriction is cancelled if the result of the determination in step S34 is YES while starting of the motorcycle 1 is being restricted. On the other hand, if the result of the determination in step S44 is NO, the process proceeds to step S15.

Step S13 and step S44 may be performed in any order or at the same time. The other respects are the same as Embodiment 1. The predetermined elapsed time in step S44 may be a fixed time at all times independent of the ethanol content, or may be varied depending on the value of the ethanol content.

As described above, the engine temperature is higher when the elapsed time after engine starting is longer. Accordingly, detecting the elapsed time after starting the engine by the elapsed time detecting unit 63a is equivalent in detecting the engine temperature. It is also possible that the relationship between elapsed time after engine starting and engine temperature may be stored in the storage unit 42 in advance and the engine temperature may be estimated from the elapsed time after engine starting. In that case, the starting restriction of the motorcycle 1 and the cancellation of the starting restriction can be performed in a similar manner to Embodiment 1.

The same advantageous effects as obtained in Embodiment 1 can be obtained in the present embodiment as well. Furthermore, the present embodiment makes it possible to perform the starting restriction of the motorcycle 1 and the cancellation of the starting restriction even without detecting the engine temperature directly.

### Embodiment 5

The foregoing Embodiments 1 and 3 may be combined together. In Embodiment 5, Embodiments 1 and 3 are combined together.

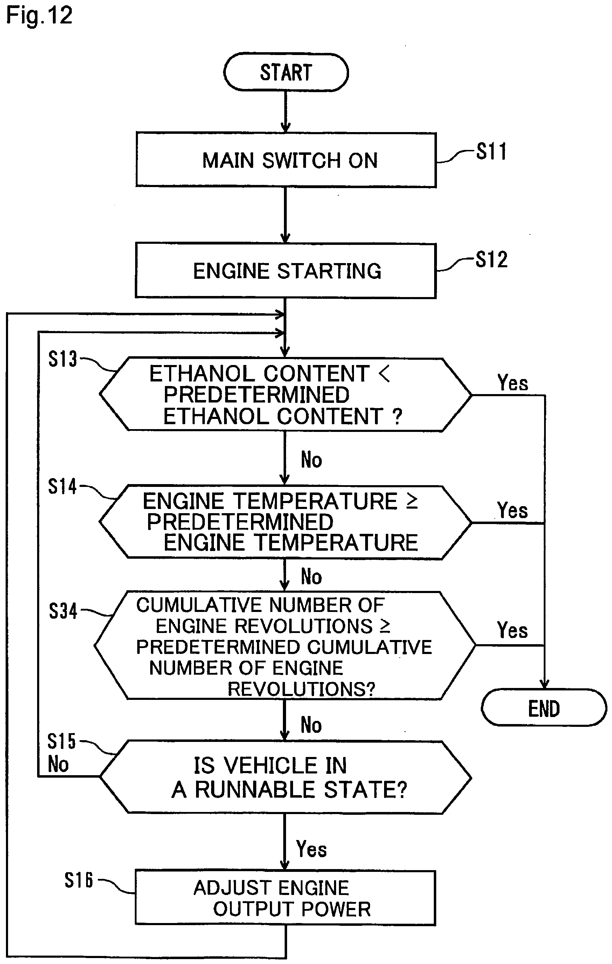

Fig. 12 is a flow chart illustrating a control process for restricting the starting of the motorcycle 1 according to the present embodiment. The control process of the vehicle starting restriction according to Embodiment 5 is the same as that according to Embodiment 1, except that step S34 is inserted between step S14 and step S15 (see Fig. 4). Step S34 has been described in detail in the description of Embodiment 3, and will not be elaborated on further.

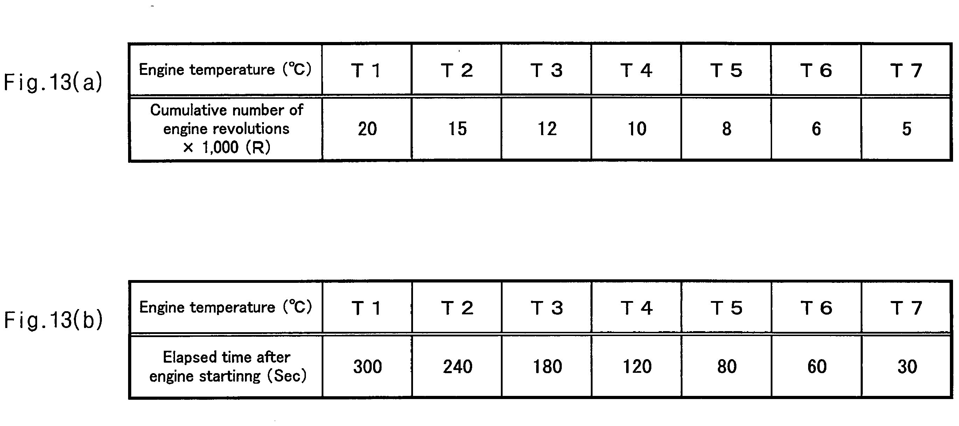

The predetermined cumulative number of engine revolutions that serves as a point of reference for the determination in step S34 may be a fixed value, or may be set as appropriate according to the engine temperature or the intake air temperature. For example, as illustrated in Fig. 13(a), the predetermined cumulative number may be set as appropriate according to the engine temperature. It should be noted that T1 < T2 < T3 < T4 < T5 < T6 < T7. In the example shown in Fig. 13(a), when the engine temperature is from T1°C to less than T2°C, the predetermined cumulative number serving as a point of reference is set at 20,000 revolutions. When the engine temperature is from T2°C to less than T3°C, the predetermined cumulative number serving as a point of reference is set at 15,000 revolutions. Likewise, when the engine temperature is from T3°C to less than T4°C, from T4°C to less than T5°C, from T5°C to less than T6°C, from T6°C to less than T7°C, and equal to or higher than T7°C, the predetermined cumulative number serving as a point of reference is set at 12,000 revolutions, 10,000 revolutions, 8,000 revolutions, 6,000 revolutions, and 5,000 revolutions, respectively.

Although the detailed description is omitted, it is also possible to combine Embodiments 2 and 3 together. Specifically, step S34 of Embodiment 3 may be inserted between step S24 and step S15 of the control process of Embodiment 2.

### Embodiment 6

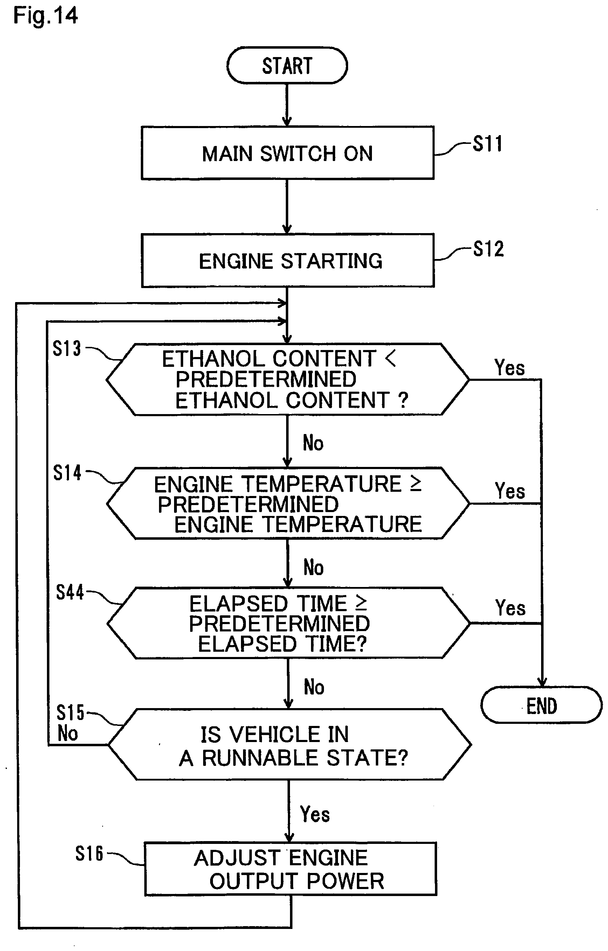

It is also possible to combine the foregoing Embodiments 1 and 4. Fig. 14 is a flow chart illustrating a control process for restricting the starting of the motorcycle 1 according to the present embodiment. The control process of the vehicle starting restriction according to Embodiment 6 is the same as that according to Embodiment 1, except that step S44 is inserted between step S14 and step S15 (see Fig. 4). Step S44 has been described in detail in the description of Embodiment 4, and will not be elaborated on further.

The predetermined elapsed time that serves as a point of reference for the determination in step S44 may be a fixed value, or may be set as appropriate according to the engine temperature or the intake air temperature. For example, as illustrated in Fig. 13(b), the predetermined elapsed time may be set as appropriate according to the engine temperature. In the example shown in Fig. 13(b), when the engine temperature is from T1°C to less than T2°C, the predetermined elapsed time serving as a point of reference is set at 300 seconds. When the engine temperature is from T2°C to less than T3°C, the predetermined elapsed time serving as a point of reference is set at 240 seconds. Likewise, when the engine temperature is from T3°C to less than T4°C, from T4°C to less than T5°C, from T5°C to less than T6°C, from T6°C to less than T7°C, and equal to or higher than T7°C, the predetermined elapsed time serving as a point of reference is set at 180 seconds, 120 seconds, 80 seconds, 60 seconds, and 30 seconds, respectively.

Although the detailed description is omitted, it is also possible to combine Embodiments 2 and 4 together. Specifically, step S44 of Embodiment 4 may be inserted between step S24 and step S15 in the control process of Embodiment 2.

### Embodiment 7

In the foregoing embodiments, the same step is used commonly both when restricting vehicle starting and when cancelling the starting restriction. For example, in Embodiment 1 (see Fig. 4), the determination in step S13 is used both when restricting the starting of the motorcycle 1 and when cancelling the starting restriction. In other words, the same predetermined ethanol content is used for both the point of reference for restricting vehicle starting and the point of reference for the cancellation of the vehicle starting restriction. However, different ethanol contents may be used for the point of reference for restricting vehicle starting and the point of reference for cancelling the vehicle starting restriction in the foregoing embodiments.

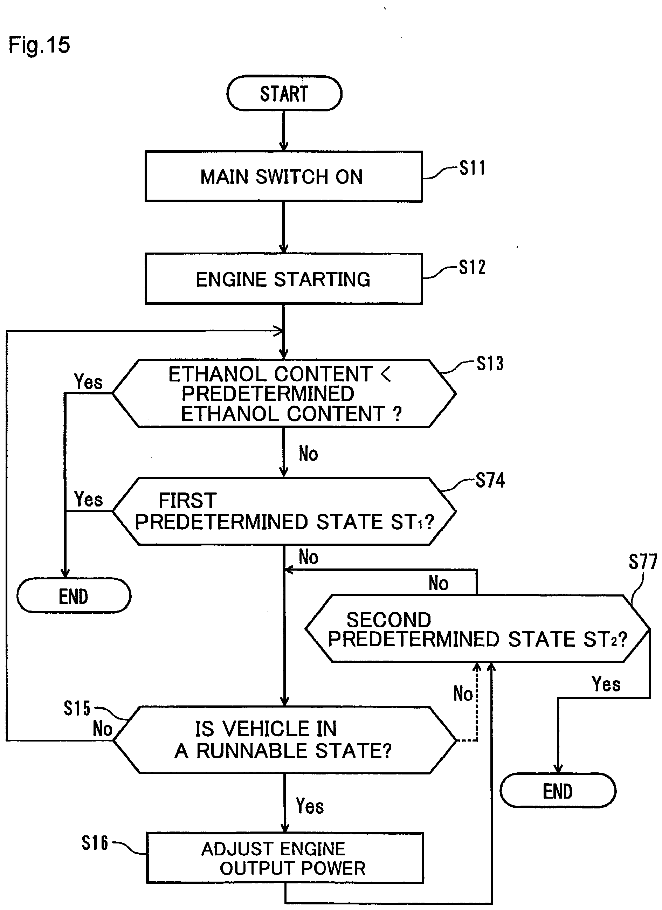

Fig. 15 is a flow chart illustrating a starting restriction control process and a restriction cancel control process for the motorcycle 1 according to the present embodiment. In the following description, the same parts as in the foregoing embodiments are designated by the same reference numerals, and the description thereof is not repeated here.

In the present embodiment, if the result of the determination in step S13 is NO, the process proceeds to step S74. At step S74, it is determined whether or not the engine state is a first predetermined state ST1. If the engine state is not the first predetermined state ST1, the process proceeds to step S15. On the other hand, if the engine state is the first predetermined state ST1, the control process is terminated.

At step S15, it is determined whether or not the motorcycle 1 has entered a runnable state. If it is determined that the motorcycle 1 has entered a runnable state, the process proceeds to step S16. At step S16, the output power of the engine 4 is adjusted so that starting of the motorcycle 1 is restricted. After step S16, the process proceeds to step S77.

At step S77, it is determined whether or not the engine state is a second predetermined state ST2. If it is determined that the engine state is not the second predetermined state ST2, it is decided that the vehicle starting restriction should not be cancelled, and the process returns to step S15. It should be noted that if the result of the determination in step S15 is NO while the vehicle starting is being restricted, the process does not return to step S13 but returns to step S77 (see the dashed line arrow in Fig. 15). On the other hand, if the engine state is the second predetermined state ST2, it is determined that the vehicle starting need not be restricted, so the control process is terminated. In other words, if the engine state enters the second predetermined state ST2, the starting restriction of the motorcycle 1 is cancelled.

Whether the engine is in the first predetermined state ST1 or not, or in the second predetermined state ST2 or not, may be determined based on, for example, the engine temperature, the intake air temperature, the cumulative number of revolutions of the engine 4 after engine starting, and the elapsed time after starting the engine 4 illustrated in the foregoing embodiments, either alone or in combinations of two or more thereof. It should be noted that the first predetermined state ST1 and the second predetermined state ST2 must be different from each other. For example, when the intake air temperature is used for the determination of the engine state, the first predetermined state may indicate the state in which the intake air temperature is equal to or higher than a first predetermined temperature, and the second predetermined state may indicate the state in which the intake air temperature is equal to or higher than a second predetermined temperature.

Whether or not the engine state is in the first predetermined state ST1 and whether or not the engine state is in the second predetermined state ST2 may be determined based on different parameters. For example, the first predetermined state ST1 may indicate the state in which the intake air temperature is equal to or higher than a predetermined temperature, whereas the second predetermined state ST2 may indicate the state in which the cumulative number of the revolutions of the engine 4 after engine starting is equal to or greater than a predetermined cumulative number.

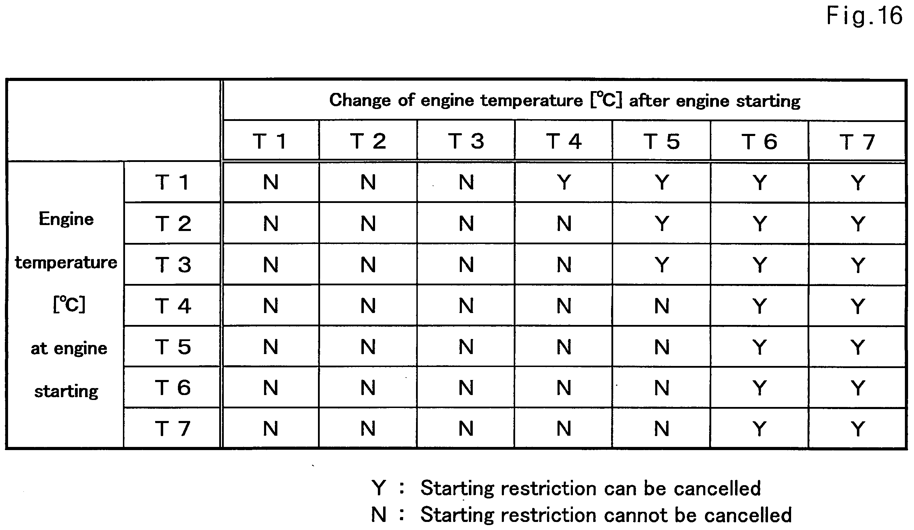

When the engine temperature is determined at step S77, the reference value for the determination may be changed as appropriate according to the temperature of the engine at the time of engine starting. For example, the determination of step S77 may be performed based on the table shown in Fig. 16. In the example shown in Fig. 16, when the engine temperature at the time of engine starting is T1°C, for example, the predetermined temperature that is a point of reference for the determination in step S77 is T4°C. Specifically, it is determined whether or not the engine temperature is equal to or higher than T4°C at step S77. Then, if the engine temperature is equal to or higher than T4°C, the vehicle starting restriction is cancelled. Likewise, when the engine temperature at the time of engine starting is T2°C or T3°C, the temperature that is a point of reference for the determination is T5°C, and when the engine temperature at the time of engine starting is from T4°C to T7°C, the temperature that is a point of reference for the determination is T6°C.

The just-described example (see Fig. 16) is particularly suitable when the temperature in the combustion chamber 25 of the engine 4 is detected indirectly by the temperature sensor 52. The reason is that, when the just-mentioned temperature is detected indirectly, it takes a certain period of time until the heat produced in the combustion chamber 25 reaches the temperature sensor 52. In other words, the detection performed by the temperature sensor 52 accompanies time delay. When the temperature sensor 52 directly detects the temperature in the combustion chamber 25, such time delay does not arise; therefore, the reference value for the determination in step S77 need not be changed according to the engine temperature at the time of engine starting.

In the case that the intake air temperature is determined at step S77 as well, the reference value for the determination may be changed as appropriate according to the intake air temperature at the time of engine starting.

Thus, according to the present embodiment, the reference temperature used when restricting starting of the motorcycle 1 and the reference temperature used when cancelling the restriction are different from each other. The reference temperature used when cancelling the restriction is associated with the temperature of the engine 4 at the time of engine starting. The present embodiment makes it possible, for example, to reduce the time from the vehicle starting restriction to the cancellation of the restriction.

### Embodiment 8

In Embodiment 8, the engine temperature that is a point of reference for restricting starting of the motorcycle 1 is varied as appropriate according to the engine temperature and ethanol content at the time of engine starting.

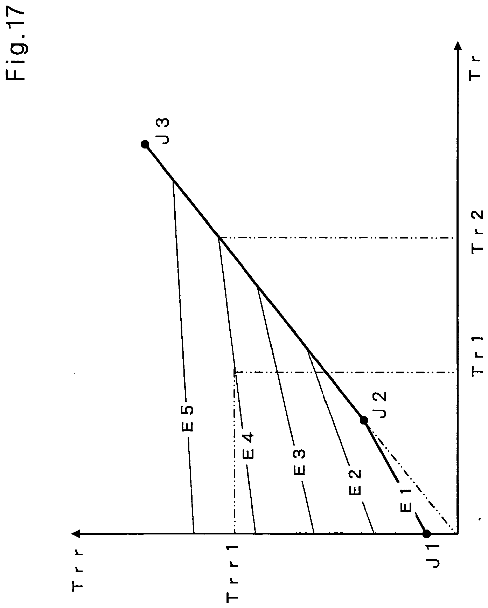

Fig. 17 is a graph illustrating the relationship of the engine temperature Tr and ethanol content at the time of engine starting versus the engine temperature Trr that is a point of reference for cancelling the vehicle starting restriction. E1 through E5 represent ethanol contents, and E1 < E2 < E3 < E4 < E5. The vehicle starting restriction is unnecessary if the ethanol content is sufficiently low. The linear line connecting point J1 and point J2 in Fig. 17 is the boundary line that indicates whether or not the vehicle starting restriction is necessary. The vehicle starting restriction is not performed in the region below the boundary line. Specifically, if the ethanol content is less than E1, the vehicle starting restriction is not performed (see step S13 in Fig. 15). In addition, the vehicle starting restriction is unnecessary if the engine temperature Tr is sufficiently high at the time of engine starting. The linear line connecting point J2 and point J3 in Fig. 17 is the boundary line that indicates whether or not the vehicle starting restriction is necessary. The vehicle starting restriction is not performed in the region on the right side of the boundary line. Specifically, if the engine temperature Tr at the time of engine starting is equal to or higher than a predetermined temperature, the vehicle starting restriction is not performed (see step S14 in Fig. 4). It will be understood from Fig. 17 that the engine temperature Trr that serves as a point of reference for cancelling the vehicle starting restriction is set higher when the ethanol content is higher or when the engine temperature Tr at the time of engine starting is higher. It will also be understood that the gradient of the linear line representing the relationship between the engine temperature Tr and the engine temperature Trr varies depending on the ethanol content.

The relationship between the engine temperature Tr at the time of engine starting, the ethanol content, and the engine temperature Trr that serves as a point of reference for cancellation of the vehicle starting restriction is defined by a three-dimensional map. The map is stored in the storage unit of the ECU 40.

With reference to the flow chart of Embodiment 7 shown in Fig. 15, a process flow in the case that the engine temperature Tr at the time of engine starting is Tr1 and the ethanol content is E4 will be described below. In this case, the ethanol content E4 is not less than E1. Therefore, the result of the determination at step S13 is NO, and the process proceeds to step S74. It is understood from Fig. 17 that the engine temperature Tr at which the vehicle starting restriction becomes necessary is Tr2 in the case that the ethanol content is E4. In the present example, the engine temperature Tr is Tr1, so the vehicle starting restriction is necessary because Tr1 is not equal to or greater than Tr2. Thus, the result of the determination in step S74 is NO, and the engine output power is suppressed at step S16. It should be noted that step S15 is omitted here because it is assumed that the motorcycle 1 is in a runnable state. After step S16, the process proceeds to step S77, at which it is determined whether or not the engine temperature is equal to or higher than the temperature Trr1 that is the point of reference for cancellation of the restriction. If the result of the determination is YES, the vehicle starting restriction is cancelled.

In the present embodiment, the engine temperature Trr that serves as a point of reference for cancelling the restriction is varied as appropriate depending on the engine temperature Tr and ethanol content at the time of engine starting, as described above. This allows the controlling to be performed more appropriately according to the ethanol content. For example, it becomes possible to shorten the time from the start of the vehicle starting restriction until the cancellation of the restriction.

It should be noted that although the engine state used for the determination is described to be the engine temperature in the above-described embodiment, it is of course possible to use other engine states such as the temperature of intake air.

### Modified Embodiment 1

In the foregoing embodiments, the determining unit 44 receives a signal from the neutral switch 14, a signal from the throttle position sensor 55, a signal from the revolution speed sensor 51, and so forth. The determining unit 44 recognizes a drive state of the motorcycle 1 based on these signals. However, the determining unit 44 may receive other signals than these signals.

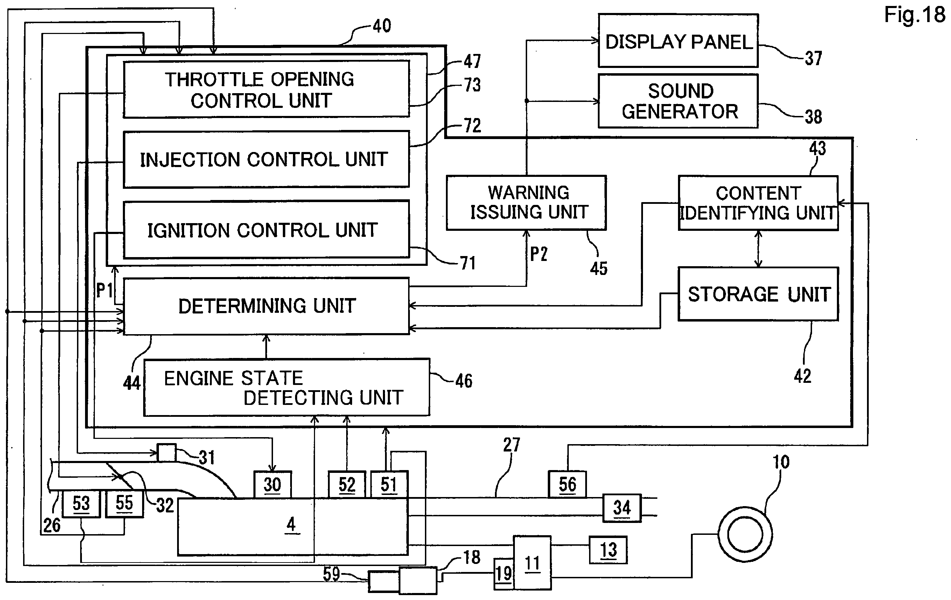

As illustrated in Fig. 18, the motorcycle 1 according to the present modified embodiment has a clutch 19. The clutch 19 transmits a driving force from the engine 4 to the transmission 11 engageably/disengageably. The clutch 19 is connected to a clutch lever 18. The clutch lever 18 is mounted on the handlebar 12 of the motorcycle 1 (see Fig. 1). When the rider operates the clutch lever 18, the clutch 19 enters a disengaged state or an engaged state.

The motorcycle 1 also has a clutch sensor 59. The clutch sensor 59 detects at least a disengaged state or an engaged state of the clutch 19 in response to the operation of the clutch lever 18. It should be noted, however, that the clutch sensor 59 may detect a disengaged state or an engaged state of the clutch 19 directly from the clutch 19.

The determining unit 44 receives a signal related to a disengaged state or an engaged state of the clutch 19 from the clutch sensor 59. The determining unit 44 can decide that the motorcycle 1 is not in a runnable state (see step S15) if the clutch 19 is in a disengaged state. On the other hand, if the clutch 19 is in an engaged state, the determining unit 44 can decide that the motorcycle 1 is in a runnable state with other conditions taken into consideration.

### Modified Embodiment 2

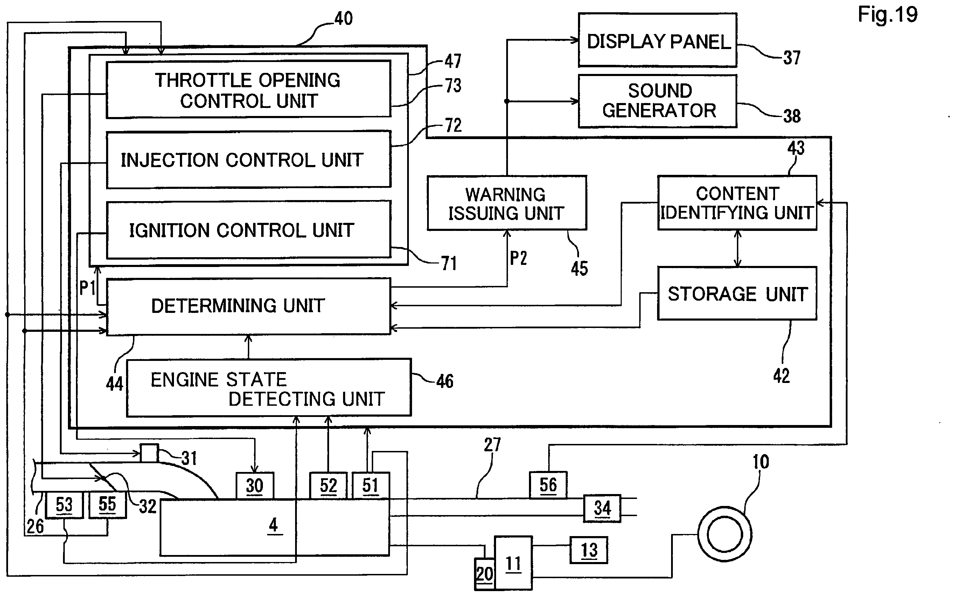

As illustrated in Fig. 19, the motorcycle 1 according to the present modified embodiment has a centrifugal clutch 20. The centrifugal clutch 20 transmits a driving force from the engine 4 to the transmission 11 engageably/disengageably. The centrifugal clutch 20 enters an engaged state when the revolution speed of the engine 4 becomes equal to or greater than a predetermined value, and enters a disengaged state when the revolution speed of the engine 4 becomes less than the predetermined value.

Whether the centrifugal clutch 20 is in a disengaged state can be detected indirectly based on the engine revolution speed. Accordingly, in the present modified embodiment, the determining unit 44 detects the state of the centrifugal clutch 20 based on the signal from the revolution speed sensor 51. However, it is of course possible to provide a clutch sensor for directly detecting a disengaged state or an engaged state of the centrifugal clutch 20, and the determining unit 44 may detect the state of the centrifugal clutch 20 directly from the clutch sensor.

The determining unit 44 can decide that the motorcycle 1 is not in a runnable state (see step S15) if the centrifugal clutch 20 is in a disengaged state. On the other hand, if the centrifugal clutch 20 is in an engaged state, the determining unit 44 can decide that the motorcycle 1 is in a runnable state with other conditions taken into consideration.

### Modified Embodiment 3

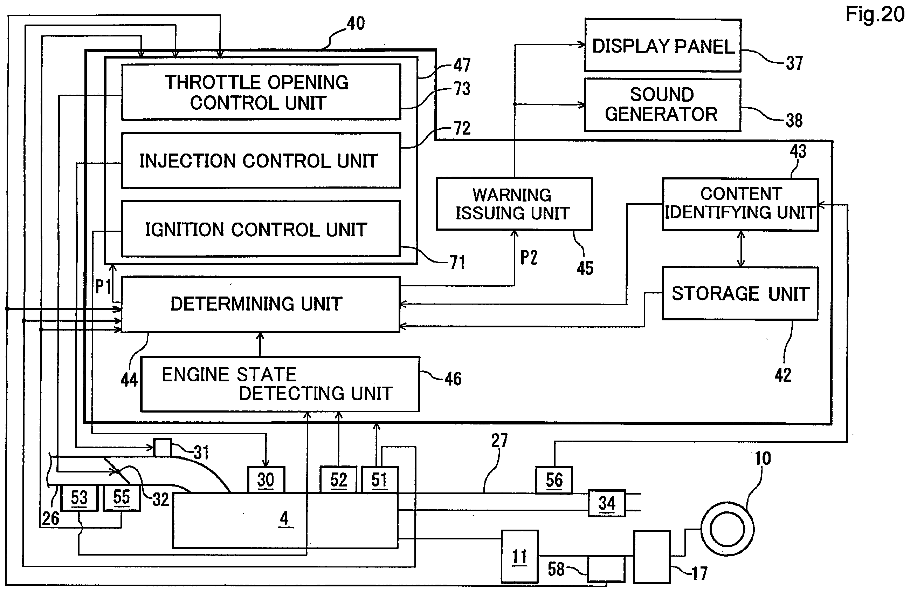

As illustrated in Fig. 20, the motorcycle 1 has a power transmission mechanism 17. The driving force from the engine 4 is transmitted to the rear wheel 10 via the power transmission mechanism 17. The motorcycle 1 also has a drive sensor 58. The drive sensor 58 is one example of means for detecting whether or not the driving force from the engine 4 is transmitted to the rear wheel 10.

The determining unit 44 detects whether or not the driving force from the engine 4 is transmitted to the rear wheel 10 based on a signal from the drive sensor 58. If the driving force from the engine 4 is transmitted to the rear wheel 10, the determining unit 44 can decide that the motorcycle 1 is in a runnable state (see step S15) with other conditions taken into consideration. On the other hand, if the driving force from the engine 4 is not transmitted to the rear wheel 10, the determining unit 44 can decide that the motorcycle 1 is not in a runnable state.

### Modified Embodiment 4

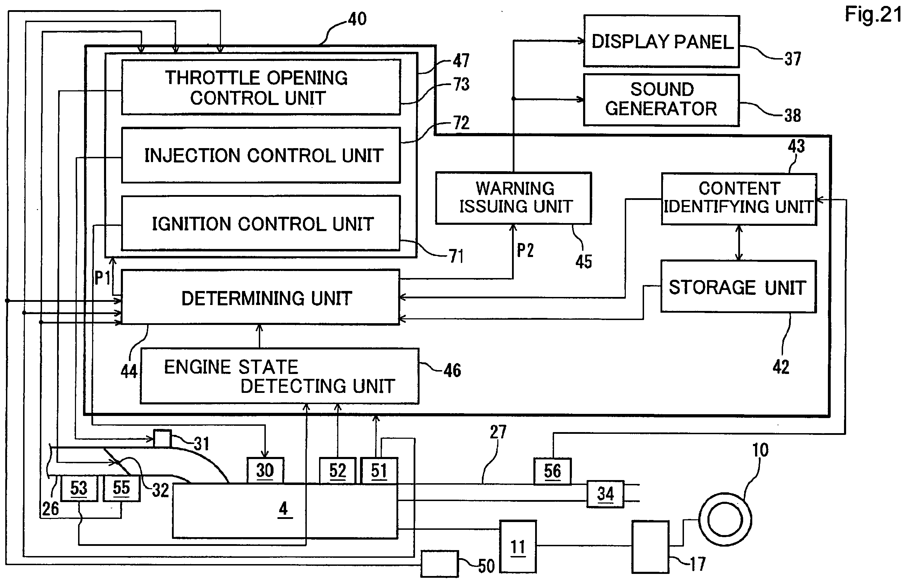

As illustrated in Fig. 21, the motorcycle 1 has a vehicle speed sensor 50. The vehicle speed sensor 50 detects the speed of the motorcycle 1. The determining unit 44 detects whether or not the vehicle speed is less than a predetermined speed based on a signal from the vehicle speed sensor 50. In other words, the determining unit 44 can detect whether or not the vehicle speed is running based on the signal from the vehicle speed sensor 50. If the vehicle speed is less than a predetermined speed (including the case in which the vehicle speed is zero), the determining unit 44 can decide that the motorcycle 1 is not in a runnable state (see step S15) with other conditions taken into consideration. On the other hand, if vehicle speed is not less than a predetermined speed, the determining unit 44 can decide that the motorcycle 1 is in a runnable state. It should be noted that, strictly speaking, the fact that the vehicle speed is not less than a predetermined speed does not mean that the motorcycle 1 is in a runnable state but that the motorcycle 1 is actually in a running state. However, as long as it is detected that the vehicle speed is not less than a predetermined speed and starting of the motorcycle 1 is restricted within a short time, the running of the motorcycle 1 during that short time can be ignored. The engine 4 is not put under excessive load in such a short time. Thus, the phrase "the vehicle speed is not less than a predetermined speed" means that the motorcycle 1 is substantially in a runnable state.

### Other Modified Embodiments

In the foregoing embodiments, the determining unit 44 determines whether or not the content identified by the content identifying unit 43 is less than the predetermined content, and it does not restrict starting of the motorcycle 1 if the content identified by the content identifying unit 43 is less than the predetermined content. In addition, the determining unit 44 cancels the starting restriction of the motorcycle 1 if the content identified by the content identifying unit 43 becomes less than the predetermined content while being restricting starting of the motorcycle 1. However, the just-described determination is not always necessary when the ethanol content of the mixed fuel is determined in advance. Specifically, the just-described determination is not always necessary when only a mixed fuel having a fixed ethanol content is used as a precondition. When the ethanol content of the mixed fuel is higher than the predetermined content, the determination (for example, step S13 of Fig. 4) may be omitted. In this case, the content identifying unit 43 may be omitted. Specifically, the just-described determination is unnecessary also when, for example, information related to the ethanol content is manually input to the ECU 40.

In the foregoing embodiments, it is possible that the vehicle starting may be restricted at all times after starting the engine 4 and thereafter the vehicle starting restriction may be cancelled according to a predetermined condition. For example, in the control process in the foregoing Embodiment 1, steps S13 through S15 may be omitted after performing steps S11 and S12 (cf. Fig. 4). Specifically, in the foregoing Embodiment 1, steps S13 through S15 may be used only as the determination condition for cancelling the vehicle starting restriction.

### Definitions in the Present Specification

In the present specification, the term "starting of a vehicle," or "vehicle starting," means that a vehicle at a standstill starts moving or running. In the present specification, the phrase "a state of the engine related to a temperature of the engine" means the state of the engine that is detected based on a physical parameter useful for determining whether or not the motorcycle can be started to run without putting the engine under a heavy load. The just-mentioned parameter is such a parameter that a change of the value of the parameter and the temperature of the engine have a correlation with each other. The correlation is such a relationship that, for example, when the engine temperature rises, the value of the parameter increases.

## Claims

1. A vehicle, comprising:
an engine (4) for generating a driving force by burning a fuel containing gasoline and alcohol; and
a control device (40) for controlling the engine (4), comprising:
a content identifying unit (43) configured to detect or estimate an alcohol content of the fuel;
a determining unit (44) configured to determine whether or not the vehicle is in a runnable state after the engine (4) has started, wherein the runnable state refers to a state in which the vehicle is capable of starting to move mechanically; and
a restricting unit (47) configured to keep the output power of the engine (4) lower than normal so that the starting of the vehicle is restricted or to cancel the restriction based at least on the identified alcohol content of the fuel and the determination whether or not the vehicle is in the runnable state,
**characterized in that** the control device (50) is further comprising
an engine revolution speed detecting unit (63) configured to detect a state of the engine (4) based on a comparison of a detected cumulative number of revolutions of the engine (4) after engine starting with a predetermined cumulative number of engine revolutions,
wherein the restricting unit (47) is configured to keep the output power of the engine (4) lower than normal so that the starting of the vehicle is restricted or to cancel the restriction based on the identified alcohol content of the fuel, the determination whether or not the vehicle is in the runnable state, the detected state of the engine (4), and optionally an engine temperature detected by an engine temperature detecting unit (61).

2. The vehicle according to claim 1, wherein:
the control device (40) further comprises a storage unit (42) configured to store the alcohol content detected or estimated by the content identifying unit (43); and
the restricting unit (47) is configured not to restrict the starting of the vehicle if the determining unit (44) determines that the alcohol content stored in the storage unit (42) is less than a predetermined value when starting the engine (4).

3. The vehicle according to claim 1 or 2, further comprising:
an air-fuel ratio sensor (56) for detecting an air-fuel ratio of an exhaust gas exhausted from the engine (4); and
wherein the content identifying unit (43) is configured to estimate the alcohol content of the fuel from the detected value obtained by the air-fuel ratio sensor (56); and wherein the restricting unit (47) is configured to cancel the restriction of the starting of the vehicle if the determining unit (44) determines that the alcohol content has reached less than a predetermined value while restricting the starting of the vehicle.

4. The vehicle according to any preceding claim, further comprising:
a temperature sensor (52), fitted to the engine (4), for detecting a temperature of a predetermined portion of the engine (4),
wherein the engine temperature detected by the engine temperature detecting unit (61) is a temperature detected by the temperature sensor (52), and
wherein the restricting unit (47) is configured to restrict the starting of the vehicle if the determining unit (44) determines that the temperature detected by the temperature sensor (52) is less than a predetermined temperature, or the restricting unit (47) is configured to cancel the restriction of the starting of the vehicle if the temperature detected by the temperature sensor (52) is equal to or higher than the predetermined temperature.

5. The vehicle according to any preceding claim, further comprising:
a sensor (51) for detecting the revolution speed or the number of revolutions of the engine (4),
wherein the state of the engine (4) detected by the engine revolution speed detecting unit (63) is the cumulative number of revolutions of the engine (4) after engine (4) starting, calculated based on a result of the detection by the sensor, and
wherein the restricting unit (47) is configured to restrict the starting of the vehicle if the determining unit (44) determines that the cumulative number is less than a predetermined value, or the restricting unit (47) is configured to cancel the restriction of the starting of the vehicle if the determining unit (44) determines that the cumulative number is equal to or higher than the predetermined value.

6. The vehicle according to any preceding claim, wherein the restricting unit (47) is configured to restrict the starting of the vehicle by reducing the output power of the engine (4) so that the vehicle cannot run.

7. The vehicle according to any preceding claim, wherein the restricting unit (47) is configured to restrict the starting of the vehicle by reducing the output power of the engine (4) so as to decrease a speed of the vehicle.

8. The vehicle according to any preceding claim, further comprising:
a transmission (11) having a neutral position; and
a neutral position sensor for detecting whether or not the transmission (11) is in a neutral position,
wherein the determining unit (44) is configured to determine that the vehicle is not in the runnable state if the transmission (11) is in a neutral position.

## Patentansprüche

1. Fahrzeug, das umfasst:
einen Motor (4) zum Erzeugen einer Antriebskraft durch Verbrennen eines Kraftstoffs, der Benzin und Alkohol enthält; sowie
eine Steuerungseinrichtung (40) zum Steuern des Motors (4), die umfasst:
eine Einheit (43) zum Identifizieren von Gehalt, die so ausgeführt ist, dass sie einen Alkoholgehalt des Kraftstoffs erfasst oder schätzt;
eine Feststell-Einheit (44), die so ausgeführt ist, dass sie feststellt, ob sich das Fahrzeug in einem fahrbaren Zustand befindet, nachdem der Motor (4) gestartet ist, wobei sich der fahrbare Zustand auf einen Zustand bezieht, in dem das Fahrzeug in der Lage ist, sich mechanisch in Bewegung zu setzen; und
eine Einschränk-Einheit (47), die so ausgeführt ist, dass sie die Ausgangsleistung des Motors (4) niedriger als normal hält, so dass das Starten des Fahrzeugs eingeschränkt wird, oder dass sie die Einschränkung auf Basis wenigstens des identifizierten Alkoholgehalts des Kraftstoffs und der Feststellung dahingehend aufhebt, ob sich das Fahrzeug in dem fahrbaren Zustand befindet,
**dadurch gekennzeichnet, dass** die Steuerungseinrichtung (50) des Weiteren umfasst
eine Einheit (63) zum Erfassen von Motordrehzahl, die so ausgeführt ist, dass sie einen Zustand des Motors (4) auf Basis eines Vergleichs einer erfassten kumulativen Anzahl von Umdrehungen des Motors (4) nach Starten des Motors mit einer vorgegebenen kumulativen Anzahl von Motorumdrehungen erfasst,
wobei die Einschränk-Einheit (47) so ausgeführt ist, dass sie die Ausgangsleistung des Motors (4) niedriger als normal hält, so dass das Starten des Fahrzeugs eingeschränkt wird, oder dass sie die Einschränkung auf Basis des identifizierten Alkoholgehalts des Kraftstoffs, der Feststellung dahingehend, ob sich das Fahrzeug in dem fahrbaren Zustand befindet, dem erfassten Zustand des Motors (4) und optional einer von einer Einheit (61) zum Erfassen von Motortemperatur erfassten Motortemperatur aufhebt.

2. Fahrzeug nach Anspruch 1, wobei:
die Steuerungseinrichtung (40) des Weiteren eine Speicher-Einheit (42) umfasst, die so ausgeführt ist, dass sie den durch die Einheit (43) zum Identifizieren von Gehalt erfassten oder geschätzten Alkoholgehalt speichert; und
die Einschränk-Einheit (47) so ausgeführt ist, dass sie das Starten des Fahrzeugs nicht einschränkt, wenn die Feststell-Einheit (44) feststellt, dass der in der Speicher-Einheit (42) gespeicherte Alkoholgehalt beim Starten des Motors (4) unter einem vorgegebenen Wert liegt.

3. Fahrzeug nach Anspruch 1 oder 2, das des Weiteren umfasst:
einen Sensor (56) für ein Luft-Kraftstoff-Verhältnis zum Erfassen eines Luft-Kraftstoff-Verhältnisses eines von dem Motor (4) ausgestoßenen Abgases; und
wobei die Einheit (43) zum Identifizieren von Gehalt so ausgeführt ist, dass sie den Alkoholgehalt des Kraftstoffs anhand des von dem Sensor (56) für ein Luft-Kraftstoff-Verhältnis ermittelten Erfassungswertes schätzt; und die Einschränk-Einheit (47) so ausgeführt ist, dass sie die Einschränkung des Startens des Fahrzeugs aufhebt, wenn die Feststell-Einheit (44) feststellt, dass der Alkoholgehalt weniger als einen vorgegebenen Wert erreicht hat, während das Starten des Fahrzeugs eingeschränkt ist.

4. Fahrzeug nach einem der vorangehenden Ansprüche, das des Weiteren umfasst:
einen Temperatursensor (52), der an dem Motor (4) angebracht ist, um eine Temperatur eines vorgegebenen Abschnitts des Motors (4) zu erfassen,
wobei die durch die Einheit (61) zum Erfassen von Motortemperatur erfasste Motortemperatur eine von dem Temperatursensor (52) erfasste Temperatur ist, und
die Einschränk-Einheit (47) so ausgeführt ist, dass sie das Starten des Fahrzeugs einschränkt, wenn die Feststell-Einheit (44) feststellt, dass die von dem Temperatursensor (52) erfasste Temperatur niedriger ist als eine vorgegebene Temperatur, oder die Einschränk-Einheit (47) so ausgeführt ist, dass sie die Einschränkung des Startens des Fahrzeugs aufhebt, wenn die von dem Temperatursensor (52) erfasste Temperatur genauso hoch ist wie oder höher als die vorgegebene Temperatur.

5. Fahrzeug nach einem der vorangehenden Ansprüche, das des Weiteren umfasst:
einen Sensor (51) zum Erfassen der Drehzahl oder der Anzahl von Umdrehungen des Motors (4),
wobei der durch die Einheit (63) zum Erfassen von Motordrehzahl erfasste Zustand des Motors (4) die kumulative Anzahl von Umdrehungen des Motors (4) nach Starten des Motors (4) ist, die auf Basis eines Ergebnisses der Erfassung durch den Sensor berechnet wird, und
die Einschränk-Einheit (47) so ausgeführt ist, dass sie das Starten des Fahrzeugs einschränkt, wenn die Feststell-Einheit (44) feststellt, dass die kumulative Anzahl unter einem vorgegebenen Wert liegt, oder die Einschränk-Einheit (47) so ausgeführt ist, dass sie die Einschränkung des Startens des Fahrzeugs aufhebt, wenn die Feststell-Einheit (44) feststellt, dass die kumulative Anzahl auf oder über dem vorgegebenen Wert liegt.

6. Fahrzeug nach einem der vorangehenden Ansprüche, wobei die Einschränk-Einheit (47) so ausgeführt ist, dass sie das Starten des Fahrzeugs einschränkt, indem sie die Ausgangsleistung des Fahrzeugs (4) so reduziert, dass das Fahrzeug nicht fahren kann.

7. Fahrzeug nach einem der vorangehenden Ansprüche, wobei die Einschränk-Einheit (47) so ausgeführt ist, dass sie das Starten des Fahrzeugs einschränkt, indem sie die Ausgangsleistung des Motors (4) so reduziert, dass eine Geschwindigkeit des Fahrzeugs verringert wird.

8. Fahrzeug nach einem der vorangehenden Ansprüche, das des Weiteren umfasst:
ein Getriebe (11) mit einer Leerlaufstellung; und
einen Leerlaufstellungs-Sensor, der erfasst, ob sich das Getriebe (11) in einer Leerlaufstellung befindet,
wobei die Feststell-Einheit (44) so ausgeführt ist, dass sie feststellt, dass sich das Fahrzeug nicht in dem fahrbaren Zustand befindet, wenn sich das Getriebe (11) in einer Leerlaufstellung befindet.

## Revendications

1. Véhicule comprenant :
un moteur thermique (4) destiné à générer une force d'entraînement par la combustion d'un carburant contenant de l'essence et de l'alcool, et
un dispositif de commande (40) destiné à piloter le moteur (4), comprenant :
une unité d'identification de teneur (43) configurée pour détecter ou pour estimer la teneur en alcool du carburant,
une unité de détermination (44) configurée pour déterminer si le véhicule se trouve ou non dans un état où il peut se déplacer après le démarrage du moteur (4), l'état de capacité à se déplacer faisant référence à un état dans lequel le véhicule peut commencer à se déplacer mécaniquement, et
une unité de limitation (47) configurée pour maintenir la puissance de sortie du moteur (4) à une valeur inférieure à la normale de sorte à ce que le démarrage du véhicule soit limité ou bien à annuler la limitation au moins sur la base de la teneur identifiée en alcool du carburant et la détermination de ce que le véhicule se trouve ou non dans un état où il peut se déplacer,
**caractérisé en ce que** le dispositif de commande (50) comprend en outre :
une unité de détection de régime de révolution de moteur (63) configurée pour détecter l'état du moteur (4) sur la base d'une comparaison du nombre cumulatif détecté de révolutions du moteur (4) après le démarrage du moteur avec un nombre cumulatif prédéterminé de révolutions du moteur,
dans lequel l'unité de limitation (47) est configurée pour maintenir la puissance de sortie du moteur (4) à une valeur inférieure à la normale de sorte à ce que le démarrage du véhicule soit limité ou bien à annuler la limitation sur la base de la teneur identifiée en alcool du carburant, de la détermination de ce que le véhicule se trouve ou non dans l'état où il peut se déplacer, de l'état détecté du moteur (4) et, en option, de la température du moteur détectée par une unité de détection de température de moteur (61).

2. Véhicule selon la revendication 1, dans lequel :
le dispositif de commande (40) comprend en outre une unité de stockage (42) configurée pour stocker la teneur en alcool détectée ou estimée par l'unité d'identification de teneur (43), et
l'unité de limitation (47) est configurée pour ne pas limiter le démarrage du véhicule si l'unité de détermination (44) a déterminé que la teneur en alcool, stockée dans l'unité de stockage (42), est inférieure à une valeur prédéterminée lors du démarrage du moteur (4).

3. Véhicule selon la revendication 1 ou la revendication 2, comprenant en outre :
un capteur de rapport air-carburant (56) destiné à détecter le rapport air-carburant du gaz d'échappement s'échappant du moteur (4), et
dans lequel l'unité d'identification de teneur (43) est configurée pour estimer la teneur en alcool du carburant à partir de la valeur détectée obtenue par le capteur de rapport air-carburant (56), et dans lequel
l'unité de limitation (47) est configurée pour annuler la limitation du démarrage du véhicule si l'unité de détermination (44) a déterminé que la teneur en alcool a atteint une valeur inférieure à une valeur prédéterminée lors de la limitation du démarrage du véhicule.

4. Véhicule selon l'une quelconque des revendications précédentes, comprenant en outre :
un capteur de température (52) ajusté sur le moteur (4) pour détecter la température d'une partie prédéterminée du moteur (4),
dans lequel la température de moteur détectée par l'unité de détection de température de moteur (61) est une température détectée par le capteur de température (52), et
dans lequel l'unité de limitation (47) est configurée pour limiter le démarrage du véhicule si l'unité de détermination (44) a déterminé que la température détectée par le capteur de température (52) est inférieure à une température prédéterminée, ou bien l'unité de limitation (47) est configurée pour annuler la limitation du démarrage du véhicule si la température détectée par le capteur de température (52) est supérieure ou égale à la température prédéterminée.

5. Véhicule selon l'une quelconque des revendications précédentes, comprenant en outre :
un capteur (51) destiné à détecter le régime de révolution ou le nombre de révolutions du moteur (4),
dans lequel l'état du moteur (4) détecté par l'unité de détection de régime de révolution de moteur (63) est le nombre cumulatif de révolutions du moteur (4) après le démarrage du moteur (4), calculé sur la base du résultat de la détection effectuée par le capteur, et
dans lequel l'unité de limitation (47) est configurée pour limiter le démarrage du véhicule si l'unité de détermination (44) a déterminé que le nombre cumulatif est inférieur à une valeur prédéterminée, ou bien l'unité de limitation (47) est configurée pour annuler la limitation du démarrage du véhicule si l'unité de détermination (44) a déterminé que le nombre cumulatif est supérieur ou égal à la valeur prédéterminée.

6. Véhicule selon l'une quelconque des revendications précédentes, dans lequel l'unité de limitation (47) est configurée pour limiter le démarrage du véhicule en réduisant la puissance de sortie du moteur (4) de sorte à ce que le véhicule ne puisse pas se déplacer.

7. Véhicule selon l'une quelconque des revendications précédentes, dans lequel l'unité de limitation (47) est configurée pour limiter le démarrage du véhicule en réduisant la puissance de sortie du moteur (4) de sorte à diminuer la vitesse du véhicule.

8. Véhicule selon l'une quelconque des revendications précédentes, comprenant en outre :
une transmission (11) comportant une position neutre, et
un capteur de position neutre destiné à détecter si la transmission (11) se trouve ou non en position neutre,
dans lequel l'unité de détermination (44) est configurée pour déterminer que le véhicule ne se trouve pas dans l'état où il peut se déplacer si la transmission (11) se trouve en position neutre.
